(19) Europäisches Patentamt
European Patent Office
Office européen des brevets

(11) EP 3 594 246 A1

(12) **EUROPEAN PATENT APPLICATION**
published in accordance with Art. 153(4) EPC

(43) Date of publication:
**15.01.2020 Bulletin 2020/03**

(21) Application number: **18764197.2**

(22) Date of filing: **06.03.2018**

(51) Int Cl.:
***C08B 11/08*** *(2006.01)* ***C08K 7/02*** *(2006.01)*
***C08L 1/26*** *(2006.01)* ***C08L 101/00*** *(2006.01)*
***D06M 13/11*** *(2006.01)*

(86) International application number:
**PCT/JP2018/008608**

(87) International publication number:
**WO 2018/164132 (13.09.2018 Gazette 2018/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.03.2017 JP 2017043306**

(71) Applicant: **Kao Corporation**
**Chuo-Ku**
**Tokyo 103-8210 (JP)**

(72) Inventors:
- **SHIBATA, Shotaro**
  **Wakayama-shi**
  **Wakayama 640-8580 (JP)**
- **YOSHIDA, Yutaka**
  **Wakayama-shi**
  **Wakayama 640-8580 (JP)**
- **KAWAHARA, Hisaho**
  **Wakayama-shi**
  **Wakayama 640-8580 (JP)**
- **KUMAMOTO, Yoshiaki**
  **Wakayama-shi**
  **Wakayama 640-8580 (JP)**

(74) Representative: **Hoffmann Eitle**
**Patent- und Rechtsanwälte PartmbB**
**Arabellastraße 30**
**81925 München (DE)**

(54) **METHOD FOR PRODUCING MODIFIED CELLULOSE FIBER**

(57) Modified cellulose fibers comprising cellulose fibers bound to one or more substituents, via an ether bonding, selected from substituents represented by the following general formula (1) and substituents represented by the following general formula (2) and one or more substituents selected from substituents represented by the following general formula (3) and substituents represented by the following general formula (4): $-CH_2-CH(OH)-R_1$ (1); $-CH_2-CH(OH)-CH_2-(OA)_n-O-R_1$ (2); $-CH_2-CH(OH)-R_2$ (3); $-CH_2-CH(OH)-CH_2-(OA)_n-O-R_2$ (4), wherein the modified cellulose fibers have cellulose I crystal structure.



Printed by Jouve, 75001 PARIS (FR)

## Description

### FIELD OF THE INVENTION

The present invention relates to a method for producing modified cellulose fibers.

### BACKGROUND OF THE INVENTION

Conventionally, plastic materials derived from limited resource petroleum have been widely used; however, in the recent years, techniques with less burdens on the environment have been spotlighted. In view of the technical background, materials using cellulose fibers, which are biomass existing in nature in large amounts have been remarked.

For example, Patent Publication 1 discloses cellulose microfibrils having a specified degree of substitution of surface, in which a hydroxyl functional group is etherified with an organic compound, for the purpose of providing microfibrils capable of being dispersed in an organic solvent, or the like (claim 1).

Patent Publication 1: Japanese Unexamined Patent Publication No. 2002-524618

### SUMMARY OF THE INVENTION

The present invention relates to the following [1] to [4]:

[1] Modified cellulose fibers comprising cellulose fibers bound to one or more substituents, via an ether bonding, selected from substituents represented by the following general formula (1) and substituents represented by the following general formula (2):

$$-CH_2-CH(OH)-R_1 \quad (1)$$

$$-CH_2-CH(OH)-CH_2-(OA)_n-O-R_1 \quad (2)$$

wherein each of $R_1$ in the general formula (1) and the general formula (2) is independently a linear or branched, unsaturated alkyl group having 2 or more carbon atoms and 30 or less carbon atoms; n in the general formula (2) is a number of 0 or more and 50 or less; and A is a linear or branched, divalent saturated hydrocarbon group having 1 or more carbon atoms and 6 or less carbon atoms, and
one or more substituents, via an ether bonding, selected from substituents represented by the following general formula (3) and substituents represented by the following general formula (4):

$$-CH_2-CH(OH)-R_2 \quad (3)$$

$$-CH_2-CH(OH)-CH_2-(OA)_n-O-R_2 \quad (4)$$

wherein each of $R_2$ in the general formula (3) and the general formula (4) is independently a hydrogen, a saturated alkyl group having 1 or more carbon atoms and 30 or less carbon atoms, an aromatic group having 6 or more carbon atoms and 30 or less carbon atoms, or a saturated hydrocarbon group having an aromatic ring having 7 or more carbon atoms and 30 or less carbon atoms; n in the general formula (4) is a number of 0 or more and 50 or less; and A is a linear or branched, divalent saturated hydrocarbon group having 1 or more carbon atoms and 6 or less carbon atoms,
wherein the modified cellulose fibers have cellulose I crystal structure.

[2] A method for producing modified cellulose fibers including introducing one or more compounds selected from unsaturated group-containing alkylene oxide compounds and unsaturated group-containing glycidyl ether compounds and one or more compounds selected from an alkylene oxide compound represented by a general formula (3A) and a glycidyl ether compound represented by a general formula (4A) to a cellulose-based raw material in the presence of a base, via an ether bonding,
wherein the modified cellulose fibers comprise cellulose fibers bound to one or more substituents, via an ether bonding, selected from substituents represented by the following general formula (1) and substituents represented by the following general formula (2):

$$-CH_2-CH(OH)-R_1 \quad (1)$$

$$-CH_2-CH(OH)-CH_2-(OA)_n-O-R_1 \quad (2)$$

wherein each of $R_1$ in the general formula (1) and the general formula (2) is independently a linear or branched, unsaturated alkyl group having 2 or more carbon atoms and 30 or less carbon atoms; n in the general formula (2) is a number of 0 or more and 50 or less; and A is a linear or branched, divalent saturated hydrocarbon group having 1 or more carbon atoms and 6 or less carbon atoms, and
one or more substituents, via an ether bonding, selected from substituents represented by the following general formula (3) and substituents represented by the following general formula (4):

$$-CH_2-CH(OH)-R_2 \quad (3)$$

$$-CH_2-CH(OH)-CH_2-(OA)_n-O-R_2 \quad (4)$$

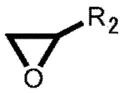

(3 A)

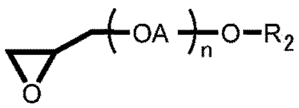

(4 A)

wherein each of $R_2$ in the general formulas (3), (3A), (4), and (4A) is independently a hydrogen, a saturated alkyl group having 1 or more carbon atoms and 30 or less carbon atoms, an aromatic group having 6 or more carbon atoms and 30 or less carbon atoms, or a saturated hydrocarbon group having an aromatic ring having 7 or more carbon atoms and 30 or less carbon atoms; n in the general formula (4) and (4A) is a number of 0 or more and 50 or less; and A is a linear or branched, divalent saturated hydrocarbon group having 1 or more carbon atoms and 6 or less carbon atoms,
wherein the modified cellulose fibers have cellulose I crystal structure.
[3] A method for producing modified cellulose fibers including introducing an unsaturated group-containing alkylene oxide compound to a cellulose-based raw material in the presence of a base via an ether bonding, and thereafter subjecting the cellulose-based raw material to a finely fibrillating treatment,
wherein the modified cellulose fibers comprise cellulose fibers bound to one or more substituents, via an ether bonding, selected from substituents represented by the following general formula (1):

$$-CH_2-CH(OH)-R_1 \quad (1)$$

wherein $R_1$ in the general formula (1) is a linear or branched, unsaturated alkyl group having 2 or more carbon atoms and 30 or less carbon atoms, wherein the modified cellulose fibers have cellulose I crystal structure.
[4] A method for producing modified cellulose fibers including introducing an unsaturated group-containing glycidyl ether compound to a cellulose-based raw material in the presence of a base via an ether bonding, and thereafter subjecting the cellulose-based raw material to a finely fibrillating treatment,
wherein the modified cellulose fibers comprise cellulose fibers bound to one or more substituents, via an ether bonding, selected from substituents represented by the following general formula (2):

$$-CH_2-CH(OH)-CH_2-(OA)_n-O-R_1 \quad (2)$$

wherein $R_1$ in the general formula (2) is a linear or branched, unsaturated alkyl group having 4 or more carbon atoms and 30 or less carbon atoms; n is a number of 0 or more and 50 or less; and A is a linear or branched, divalent saturated hydrocarbon group having 1 or more carbon atoms and 6 or less carbon atoms,
wherein the modified cellulose fibers have cellulose I crystal structure.
[5] Modified cellulose fibers having an average fiber diameter of 5 $\mu$m or more, wherein the modified cellulose fibers comprise cellulose fibers bound to one or more substituents, via an ether bonding, selected from substituents represented by the following general formula (1) and substituents represented by the following general formula (2):

$$-CH_2-CH(OH)-R_1 \quad (1)$$

$$-CH_2-CH(OH)-CH_2-(OA)_n-O-R_1 \quad (2)$$

wherein each of $R_1$ in the general formula (1) and the general formula (2) is independently a linear or branched, unsaturated alkyl group having 2 or more carbon atoms and 30 or less carbon atoms; n in the general formula (2) is a number of 0 or more and 50 or less; and A is a linear or branched, divalent saturated hydrocarbon group having 1 or more carbon atoms and 6 or less carbon atoms,
wherein the modified cellulose fibers have cellulose I crystal structure.
[6] A resin composition containing modified cellulose fibers as defined in [1] or [5] or modified cellulose fibers obtained by the method as defined in any one of [2] to [4], and a resin having a hydroxyl value of 700 mgKOH/g or less.

## DETAILED DESCRIPTION OF THE INVENTION

However, the cellulose microfibrils of Patent Publication 1 were not sufficiently satisfactory in dispersibility in an organic solvent or in a resin.
The present invention relates to a method for producing modified cellulose fibers for giving a resin composition having a high dispersibility in an organic solvent or in a resin, and a high homogeneity when added to a resin.
According to the present invention, a method for producing modified cellulose fibers for giving a resin composition having a high dispersibility in an organic solvent or in a resin, and a high homogeneity when added to a resin can be provided.
The modified cellulose fibers produced by the method for production of the present invention surprisingly show high dispersibility in an organic solvent or in a resin. Since there are no prior arts suggesting the function and effects as described above, it would be even difficult for one of ordinary skill in the art to expect the exhibition of the function and effects.

[Method for Producing Modified Cellulose Fibers]

The method for production of the present invention includes specifically the following two embodiments. First Embodiment is a method for producing modified cellulose fibers including introducing one or more compounds selected from unsaturated group-containing alkylene oxide compounds and unsaturated group-containing glycidyl ether compounds to a cellulose-based raw material in the presence of a base, via an ether bonding, and thereafter subjecting the cellulose-based raw material to a finely fibrillating treatment. Moreover, Second Embodiment is a method for producing modified cellulose fibers including introducing one or more compounds selected from unsaturated group-containing alkylene oxide compounds and unsaturated group-containing glycidyl ether compounds, and one or more compounds selected from an alkylene oxide compound represented by a general formula (3A) given later and a glycidyl ether compound represented by a general formula (4A) given later, to a cellulose-based raw material in the presence of a base, via an ether bonding. Here, the phrase "bound ... via an ether bonding" as used herein means a state of ether bonding when a substituent reacts with a hydroxyl group on a surface of cellulose fibers. Further, in the present specification, a compound in which a given substituent is introduced to a cellulose-based raw material via an ether bonding is referred to as an etherification agent.

[Method for Producing Modified Cellulose Fibers of First Embodiment]

The modified cellulose fibers produced by the method of First Embodiment comprise cellulose fibers bound to one or more substituents, via an ether bonding, selected from substituents represented by the following general formula (1) and substituents represented by the following general formula (2):

$$-CH_2-CH(OH)-R_1 \qquad (1)$$

$$-CH_2-CH(OH)-CH_2-(OA)_n-O-R_1 \qquad (2)$$

wherein each of $R_1$ in the general formula (1) and the general formula (2) is independently a linear or branched, unsaturated alkyl group having 2 or more carbon atoms, and preferably 3 or more carbon atoms, and 30 or less carbon atoms; n in the general formula (2) is a number of 0 or more and 50 or less; and A is a linear or branched, divalent saturated hydrocarbon group having 1 or more carbon atoms and 6 or less carbon atoms,
wherein the modified cellulose fibers have a cellulose I crystal structure.

(Cellulose-Based Raw Materials)

The cellulose-based raw materials usable in the present invention include, but not particularly limited to, woody

raw materials (needle-leaf trees and broad-leaf trees); grassy raw materials (plant raw materials of Gramineae, Malvaceae, and Fabaceae, non-woody raw materials of plants of Palmae); pulps (cotton linter pulps obtained from fibers surrounding the cottonseeds, etc.); papers (newspapers, corrugated cardboards, magazines, high-quality paper, etc.) and the like. Among them, woody raw materials and grassy raw materials are preferred, from the viewpoint of availability and costs.

The shapes of the cellulose-based raw materials are, but not particularly limited to, preferably in fibrous, powdery, spherical, chip-like, or flaky form. In addition, it may be a mixture thereof.

In addition, the cellulose-based raw materials can be subjected to at least one pretreatment selected from biochemical treatment, chemical treatment, and mechanical treatment, from the viewpoint of handing property and the like. In the biochemical treatment, the chemical used is not particularly limited, and the biochemical treatment includes, for example, a treatment using an enzyme such as endoglucanase, exoglucanase, or beta-glucosidase. In the chemical treatment, the chemical used is not particularly limited, and the chemical treatment includes, for example, an acid treatment with hydrochloric acid, sulfuric acid, or the like, and an oxidation treatment with hydrogen peroxide, ozone, or the like. In the mechanical treatment, the machines used and the treatment conditions are not particularly limited, and examples include roll mills such as high-pressure compression roll mills and roll-rotating mills, vertical roller mills such as ring roller mills, roller race mills or ball race mills, vessel driving medium mills such as tumbling ball mills, vibrating ball mills, vibrating rod mills, vibrating tube mills, planetary ball mills, or centrifugal fluidized bed mills, media agitating mills such as tower pulverizers, agitation tank-containing mills, flow tank-containing mills or annular mills, compact shearing mills such as high-speed centrifugal roller mills or angmills, triturators such as mortar, millstone, Masscolloider, fret mills, edge-runner mills, knife mills, pin mills, and cutter mills, and the like.

In addition, during the above mechanical treatment, the shape transformation by the mechanical treatment can also be accelerated by adding an aid such as a solvent such as water, ethanol, isopropyl alcohol, t-butyl alcohol, toluene, or xylene, a plasticizer such as a phthalic acid compound, an adipic acid compound, or a trimellitic acid compound, a hydrogen bonding-inhibitor such as urea, an alkali (alkaline earth) metal hydroxide, or an amine-based compound. By adding the shape transformation as described above, the handling property of the cellulose-based raw materials is improved, which makes the introduction of a substituent favorable, which in turn makes it possible to also improve the physical properties of the modified cellulose fibers obtained. The amount of the additive aid used varies depending upon the additive aid used, a means of the mechanical treatment used or the like, and the amount used, based on 100 parts by mass of the raw material is preferably 5 parts by mass or more, more preferably 10 parts by mass or more, and even more preferably 20 parts by mass or more, from the viewpoint of exhibiting the effects for accelerating the shape transformation, and the amount used is preferably 10,000 parts by mass or less, more preferably 5,000 parts by mass or less, and even more preferably 3,000 parts by mass or less, from the viewpoint of exhibiting the effects for accelerating the shape transformation and from the viewpoint of economic advantages.

The average fiber diameter of the cellulose-based raw materials is, but not particularly limited to, preferably 5 μm or more, more preferably 7 μm or more, even more preferably 10 μm or more, and even more preferably 15 μm or more, from the viewpoint of handling property and costs. In addition, the upper limit is, but not particularly set to, preferably 10,000 μm or less, more preferably 5,000 μm or less, even more preferably 1,000 μm or less, even more preferably 500 μm or less, and still even more preferably 100 μm or less, from the viewpoint of handling property.

The method for measuring an average fiber diameter of the cellulose-based raw materials is as described in Examples set forth below.

The composition of the cellulose-based raw materials is not particularly limited. It is preferable that the cellulose content in the cellulose-based raw materials is preferably 30% by mass or more, more preferably 50% by mass or more, and even more preferably 70% by mass or more, from the viewpoint of obtaining cellulose fibers, and the cellulose content is preferably 99% by mass or less, more preferably 98% by mass or less, even more preferably 95% by mass or less, and even more preferably 90% by mass or less, from the viewpoint of availability. Here, the cellulose content in the cellulose-based raw materials refers to a cellulose content in the remainder component after removing water in the cellulose-based raw materials.

In addition, the water content in the cellulose-based raw materials is, but not particularly limited to, the lower the better, from the viewpoint of handling property. For example, the water content is preferably 50% by mass or less, more preferably 40% by mass or less, even more preferably 30% by mass or less, even more preferably 20% by mass or less, and even more preferably those that are treated to absolute dryness, i.e. 10% by mass or less.

(Base)

The introduction of the above substituent is carried out in the presence of a base. The base usable herein is, but not particularly limited to, preferably one or more members selected from the group consisting of alkali metal hydroxides, alkaline earth metal hydroxides, primary to tertiary amines, quaternary ammonium salts, imidazoles and derivatives thereof, pyridine and derivatives thereof, and alkoxides, from the viewpoint of progressing the etherification

reaction.

The alkali metal hydroxide and the alkaline earth metal hydroxide include sodium hydroxide, potassium hydroxide, lithium hydroxide, calcium hydroxide, barium hydroxide, and the like.

The primary to tertiary amines refer to primary amines, secondary amines, and tertiary amines, and specific examples include ethylenediamine, diethylamine, proline, N,N,N',N'-tetramethylethylenediamine, N,N,N',N'-tetramethyl-1,3-propanediamine, N,N,N',N'-tetramethyl-1,6-hexanediamine, tris(3-dimethylaminopropyl)amine, N,N-dimethylcyclohexylamine, triethylamine, and the like.

The quaternary ammonium salt includes tetrabutylammonium hydroxide, tetrabutylammonium chloride, tetrabutylammonium fluoride, tetrabutylammonium bromide, tetraethylammonium hydroxide, tetraethylammonium chloride, tetraethylammonium fluoride, tetraethylammonium bromide, tetramethylammonium hydroxide, tetramethylammonium chloride, tetramethylammonium fluoride, tetramethylammonium bromide, and the like.

The imidazole and derivatives thereof include 1-methylimidazole, 3-aminopropylimidazole, carbonyldiimidazole, and the like.

The pyridine and derivatives thereof include N,N-dimethyl-4-aminopyridine, picoline, and the like.

The alkoxide includes sodium methoxide, sodium ethoxide, potassium t-butoxide, and the like.

The amount of the base, based on the anhydrous glucose unit of the cellulose-based raw materials, is preferably 0.01 equivalents or more, more preferably 0.05 equivalents or more, even more preferably 0.1 equivalents or more, and even more preferably 0.2 equivalents or more, from the viewpoint of progressing the etherification reaction, and the amount of the base is preferably 10 equivalents or less, more preferably 8 equivalents or less, even more preferably 5 equivalents or less, and even more preferably 3 equivalents or less, from the viewpoint of production costs. Here, the anhydrous glucose unit is abbreviated as "AGU." AGU is calculated assuming that all the cellulose-based raw materials are constituted by the anhydrous glucose units.

The mixing of the cellulose-based raw materials and the base may be carried out in the presence of a solvent. The solvent includes, but not particularly limited to, for example, water, isopropanol, t-butanol, dimethylformamide, toluene, methyl isobutyl ketone, acetonitrile, dimethyl sulfoxide, dimethylacetamide, 1,3-dimethyl-2-imidazolidinone, hexane, 1,4-dioxane, and mixtures thereof.

The mixing of the cellulose-based raw materials and the base is not limited in the temperature and time, so long as the components can be homogeneously mixed.

(Unsaturated Group-Containing Alkylene Oxide Compound and Unsaturated Group-Containing Glycidyl Ether Compound)

Next, to a mixture of the cellulose-based raw materials and the base obtained above are added one or more compounds selected from unsaturated group-containing alkylene oxide compounds and unsaturated group-containing glycidyl ether compounds so that the cellulose fibers are bound to the above substituent.

The unsaturated group-containing alkylene compound is used for binding cellulose fibers to a substituent represented by the general formula (1). The unsaturated group-containing alkylene oxide compound includes, for example, alkylene oxide compounds. Specific examples include 3,4-epoxy-1-butene, 1,2-epoxy-5-hexene, 1,2-epoxy-9-decene, 1,2-epoxy-17-octadecene, and the like. Among these compounds, 1,2-epoxy-5-hexene and 1,2-epoxy-9-decene are preferred, from the viewpoint of availability, costs, and the dispersibility in the organic solvent or in the resin.

The unsaturated group-containing glycidyl ether compound is used for binding cellulose fibers to a substituent represented by the general formula (2). The unsaturated group-containing glycidyl ether compound includes, for example, glycidyl ether compounds. Specific examples include allyl glycidyl ether, 3-butenyl glycidyl ether, 5-hexenyl glycidyl ether, isoprenyl glycidyl ether, 9-decenyl glycidyl ether, 9-octadecenyl glycidyl ether, 17-octadecenyl glycidyl ether, and the like. Among these compounds, allyl glycidyl ether, 9-octadecenyl glycidyl ether, and 17-octadecenyl glycidyl ether are preferred, from the viewpoint of availability, costs, and the dispersibility in the organic solvent or in the resin.

The amount of the unsaturated group-containing alkylene oxide compound and the unsaturated group-containing glycidyl ether compound can be determined by a desired introduction ratio of the substituent in the modified cellulose fibers obtained. For example, the amount of the compound, based on one unit of the anhydrous glucose unit of the cellulose-based raw materials, is preferably 10.0 equivalents or less, more preferably 8.0 equivalents or less, even more preferably 7.0 equivalents or less, and even more preferably 6.0 equivalents or less, and preferably 0.02 equivalents or more, more preferably 0.05 equivalents or more, even more preferably 0.1 equivalents or more, even more preferably 0.3 equivalents or more, and even more preferably 1.0 equivalent or more, from the viewpoint of the dispersibility during the mixing in the resin or the like. Here, when both of the unsaturated group-containing alkylene oxide compound and the unsaturated group-containing glycidyl ether compound are used, the amount of the compounds is a total amount of the both.

(Etherification Reaction)

The etherification reaction of the above compound and the cellulose-based raw materials can be carried out by mixing the two components in the presence of a solvent. The solvent is not particularly limited, and the above solvent which is exemplified to be usable in the presence of a base can be used.

The amount of the solvent used is not unconditionally determined because the amount used depends upon the kinds of the cellulose-based raw materials and the compound to which a substituent is to be introduced. The amount of the solvent used, based on 100 parts by mass of the cellulose-based raw materials, is preferably 15 parts by mass or more, more preferably 30 parts by mass or more, even more preferably 50 parts by mass or more, even more preferably 75 parts by mass or more, and even more preferably 100 parts by mass or more, from the viewpoint of the reactivities, and the amount used is preferably 10,000 parts by mass or less, more preferably 7,500 parts by mass or less, even more preferably 5,000 parts by mass or less, even more preferably 2,500 parts by mass or less, and even more preferably 1,000 parts by mass or less, from the viewpoint of productivity.

The mixing conditions are not particularly limited so long as the cellulose-based raw materials and the compound to which a substituent is to be introduced are homogeneously mixed, so that the reaction can be sufficiently progressed, and continuous mixing treatment may or may not be carried out. In a case where a relatively large reaction vessel having a size exceeding 1 L is used, stirring may be appropriately carried out from the viewpoint of controlling the reaction temperature.

The reaction temperature is not unconditionally determined because the reaction temperature depends upon the kinds of the cellulose-based raw materials and the compound to which a substituent is to be introduced and an intended introduction ratio, and the reaction temperature is preferably 30°C or higher, more preferably 35°C or higher, and even more preferably 40°C or higher, from the viewpoint of improving the reactivities, and the reaction temperature is preferably 120°C or lower, more preferably 110°C or lower, even more preferably 100°C or lower, even more preferably 90°C or lower, even more preferably 80°C or lower, and even more preferably 70°C or lower, from the viewpoint of inhibiting pyrolysis.

The reaction time is not unconditionally determined because the reaction time depends upon the kinds of the cellulose-based raw materials and the compound to which a substituent is to be introduced and an intended introduction ratio, and the reaction time is preferably 0.1 hours or more, more preferably 0.5 hours or more, even more preferably 1 hour or more, even more preferably 3 hours or more, even more preferably 6 hours or more, and even more preferably 10 hours or more, from the viewpoint of the reactivities, and the reaction time is preferably 60 hours or less, more preferably 48 hours or less, and even more preferably 36 hours or less, from the viewpoint of productivity.

After the reaction, a post-treatment can be appropriately carried out in order to remove an unreacted compound, an unreacted base, or the like. As the method for post-treatment, for example, an unreacted base can be neutralized with an acid (an organic acid, an inorganic acid, etc.), and thereafter washed with a solvent that dissolves the unreacted compound or base. As desired, drying (vacuum drying etc.) may be further carried out.

Thus, the modified cellulose fibers before the finely fibrillating treatment introduced with one or more substituents selected from substituents represented by the general formula (1) and substituents represented by the general formula (2) are obtained.

[Modified Cellulose Fibers Before Finely Fibrillating Treatment in the Method of First Embodiment]

The modified cellulose fibers before the finely fibrillating treatment in the method of First Embodiment comprise cellulose fibers bound to one or more substituents, via an ether bonding, selected from substituents represented by the general formula (1) and substituents represented by the general formula (2), wherein the modified cellulose fibers have a cellulose I crystal structure. A specific structure can be shown by, for example, the general formula (5):

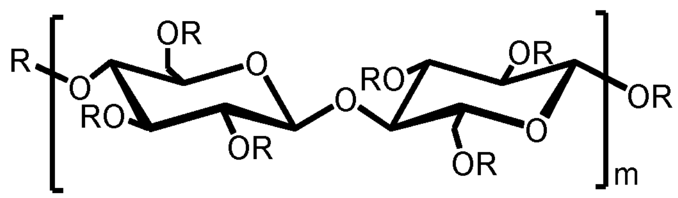

(5)

wherein R, each of which may be identical or different, is a hydrogen and a substituent selected from the substituents represented by the general formulas (1) and (2); m is preferably an integer of 20 or more and 3,000 or less, with proviso that a case where all the R's are simultaneously hydrogen is excluded.

m in the general formula (5) is preferably an integer of 20 or more and 3,000 or less, and it is more preferably an

integer of 100 or more and 2,000 or less, from the viewpoint of mechanical strength.

The substituents represented by the general formula (1) and the substituents represented by the general formula (2) in the general formula (5) are as follows. Here, even if the introduced substituent in the modified cellulose fibers were either one of the substituents represented by the general formula (1) and the substituents represented by the general formula (2):

$$-CH_2-CH(OH)-R_1 \quad (1)$$

$$-CH_2-CH(OH)-CH_2-(OA)_n-O-R_1 \quad (2)$$

wherein each of $R_1$ in the general formula (1) and the general formula (2) is independently a linear or branched, unsaturated alkyl group having 2 or more carbon atoms, and preferably 3 or more carbon atoms, and 30 or less carbon atoms; n in the general formula (2) is a number of 0 or more and 50 or less; and A is a linear or branched, divalent saturated hydrocarbon group having 1 or more carbon atoms and 6 or less carbon atoms, each of the substituents, which may be the identical substituent or a combination of two or more kinds may be introduced.

Each of $R_1$ in the general formula (1) and the general formula (2) is independently a linear or branched, unsaturated alkyl group having 2 or more carbon atoms, and preferably 3 or more carbon atoms, and 30 or less carbon atoms. The number of carbon atoms of $R_1$ is preferably 3 or more, and more preferably 6 or more, from the viewpoint of the dispersibility in the organic solvent or in the resin, and the number of carbon atoms is preferably 30 or less, and more preferably 20 or less, from the viewpoint of availability or costs. Specific examples of $R_1$ include a vinyl group, an allyl group, a 3-butenyl group, a 5-hexenyl group, an isoprenyl group, a 9-decenyl group, a 9-octadecenyl group, a 17-octadecenyl group, and the like.

n in the general formula (2) is the number of moles of alkylene oxides added. n is the number of 0 or more and 50 or less, and the number is preferably 0, from the viewpoint of availability and costs, and the number is preferably 40 or less, more preferably 30 or less, even more preferably 20 or less, and even more preferably 15 or less, from the same viewpoint.

A in the general formula (2) is a linear or branched, divalent saturated hydrocarbon group having 1 or more carbon atoms and 6 or less carbon atoms, which forms an oxyalkylene group with an adjoining oxygen atom. The number of carbon atoms of A is 1 or more and 6 or less, and the number is preferably 2 or more, from the viewpoint of availability and costs, and the number is preferably 4 or less, and more preferably 3 or less, from the same viewpoint. Specific examples include a methylene group, an ethylene group, a propylene group, a butylene group, a pentylene group, a hexylene group, and the like, among which an ethylene group and a propylene group are preferred, and an ethylene group is more preferred.

The combination of A and n in the general formula (2) is preferably a combination in which A is a linear or branched, divalent saturated hydrocarbon group having 2 or more carbon atoms and 3 or less carbon atoms and n is a number of 0 or more and 20 or less, and more preferably a combination in which A is a linear or branched, divalent saturated hydrocarbon group having 2 or more carbon atoms and 3 or less carbon atoms and n is a number of 0 or more and 15 or less, from the viewpoint of availability and costs.

(Average Fiber Diameter)

The average fiber diameter of the modified cellulose fibers before the finely fibrillating treatment in the method of First Embodiment is, irrespective of the kinds of the substituents, preferably 5 μm or more. The average fiber diameter is more preferably 7 μm or more, even more preferably 10 μm or more, and even more preferably 15 μm or more, from the viewpoint of handling property, availability, and costs. In addition, the upper limit is, but not particularly set to, preferably 10,000 μm or less, more preferably 5,000 μm or less, even more preferably 1,000 μm or less, even more preferably 500 μm or less, and still even more preferably 100 μm or less, from the viewpoint of handling property.

Here, the average fiber diameter of the modified cellulose fibers can be measured in the same manner as in the cellulose-based raw materials mentioned above. The details are as described in Examples.

(Crystallinity)

The crystallinity of the modified cellulose fibers before the finely fibrillating treatment is preferably 10% or more, more preferably 15% or more, and even more preferably 20% or more, from the viewpoint of exhibiting intensity. In addition, the crystallinity is preferably 90% or less, more preferably 85% or less, even more preferably 80% or less, and even more preferably 75% or less, from the viewpoint of availability of the raw materials. The crystallinity of the cellulose as used herein is a cellulose I crystallinity calculated from diffraction intensity values according to X-ray diffraction method,

which can be measured in accordance with a method described in Examples set forth below. Here, cellulose I is a crystalline form of a natural cellulose, and the cellulose I crystallinity means a proportion of the amount of crystalline region that occupies the entire cellulose. The presence or absence of the cellulose I crystal structure can be judged by the presence of a peak at 2θ = 22.6° in the X-ray diffraction measurement.

(Introduction Ratio)

In the modified cellulose fibers before the finely fibrillating treatment in the method of First Embodiment, the introduction ratio (MS) of a substituent represented by the general formula (1) and/or a substituent represented by the general formula (2) based on one mol of the anhydrous glucose unit of the cellulose is preferably 0.001 mol or more, more preferably 0.005 mol or more, even more preferably 0.01 mol or more, even more preferably 0.05 mol or more, and even more preferably 0.1 mol or more, from the viewpoint of affinity between the solvent and the resins. Also, the introduction ratio is preferably 1.5 mol or less, more preferably 1.3 mol or less, even more preferably 1.0 mol or less, even more preferably 0.8 mol or less, even more preferably 0.6 mol or less, and even more preferably 0.5 mol or less, from the viewpoint of having a cellulose I crystal structure and exhibiting intensity. Here, in a case where both the substituent represented by the general formula (1) and the substituent represented by the general formula (2) are introduced, the introduction ratio refers to a total introduction molar ratio. Here, the introduction ratio as used herein can be measured in accordance with a method described in Examples set forth below, which may be also described as an introduction molar ratio or a modification ratio.

(Finely Fibrillating Treatment)

The method for producing modified cellulose fibers of First Embodiment embraces the step of subjecting the above modified cellulose fibers before finely fibrillating treatment to a finely fibrillating treatment. The finely fibrillating treatment can be carried out by a known finely fibrillating treatment method. For example, in a case where fine modified cellulose fibers having an average fiber diameter of 1 nm or more and 500 nm or less are obtained, modified cellulose fibers can be finely fibrillated by a treatment using a grinder such as Masscolloider, or a treatment using a high-pressure homogenizer or the like in an organic solvent. Alternatively, the finely fibrillating treatment can also be carried out at the same time as the mixing of the resins mentioned later and the modified cellulose fibers. In addition, the modified cellulose fibers of the present invention may be, for example, subjected to similar treatments to the reaction products as the pretreatment to the cellulose-based raw materials, after the above reaction, as mentioned above, to provide into the form of chips, flakes, or powders. Since the changes in shapes are brought about by the treatment, the efficiency of the finely fibrillating treatment can be improved when the modified cellulose fibers of the present invention obtained are finely fibrillated in an organic solvent or a resin composition. Here, the finely fibrillating treatment as used herein refers to a treatment of finely fibrillating modified cellulose fibers to a nano-scale, and the modified cellulose fibers of the present invention that are subjected to finely fibrillating treatment may be referred to "fine modified cellulose fibers," from the viewpoint of distinguishing with the modified cellulose fibers before the finely fibrillating treatment.

The organic solvent used in the finely fibrillating treatment when the fine modified cellulose fibers having an average fiber diameter of 1 nm or more and 500 nm or less are obtained includes, but not particularly limited to, for example, alcohols having from 1 to 6 carbon atoms, and preferably having from 1 to 3 carbon atoms, such as methanol, ethanol, and propanol; ketones having from 3 to 6 carbon atoms, such as acetone, methyl ethyl ketone, and methyl isobutyl ketone; linear or branched, saturated hydrocarbons or unsaturated hydrocarbons, each having from 1 to 6 carbon atoms; aromatic hydrocarbons such as benzene and toluene; halogenated hydrocarbons such as methylene chloride and chloroform; lower alkyl ethers having from 2 to 5 carbon atoms; polar solvents such as N,N-dimethylformamide (DMF), N,N-dimethylacetamide, dimethyl sulfoxide, a diester of succinic acid and triethylene glycol monomethyl ether, and the like. These solvents can be used alone or in a mixture of two or more kinds, and the alcohols having from 1 to 6 carbon atoms, the ketones having from 3 to 6 carbon atoms, the lower alkyl ethers having from 2 to 5 carbon atoms, N,N-dimethylformamide, a diester of succinic acid methyl triglycol, toluene, and the like are preferred, from the viewpoint of operability of the finely fibrillating treatment. The amount of the solvent used is not particularly limited, so long as the amount used is an effective amount that can disperse the modified cellulose fibers. The solvent is used in an amount of preferably 1 time the mass or more, and more preferably 2 times the mass or more, and preferably 500 times the mass or less, and more preferably 200 times the mass or less, based on the modified cellulose fibers.

In addition, as the apparatus used in the finely fibrillating treatment, a known dispersing machine other than a high-pressure homogenizer is suitably used. For example, a disintegrator, a beating machine, a low-pressure homogenizer, a grinder, Masscolloider, a cutter mill, a ball-mill, a jet mill, a short shaft extruder, a twin-screw extruder, a pressurized kneader, a Banbury mixer, Labo-plastomill, an ultrasonic agitator, a juice mixer for households, or the like can be used. In addition, the solid content concentration of the modified cellulose fibers in the finely fibrillating treatment is preferably 50% by mass or less.

The average fiber diameter of the finely fibrillated modified cellulose fibers may be, for example, from 1 to 500 nm or so, and the average fiber diameter is preferably 3 nm or more, more preferably 10 nm or more, and even more preferably 20 nm or more, from the viewpoint of handling property and costs, and the average fiber diameter is preferably 300 nm or less, more preferably 200 nm or less, even more preferably 150 nm or less, and still even more preferably 120 nm or less, from the viewpoint of the dispersibility in the organic solvent or in the resin.
Thus, the fine modified cellulose fibers produced by the method of First Embodiment are obtained.

[Fine Modified Cellulose Fibers in First Embodiment]

The fine modified cellulose fibers in the method of First Embodiment comprise cellulose fibers bound to one or more substituents, via an ether bonding, selected from substituents represented by the general formula (1) and substituents represented by the general formula (2), wherein the fine modified cellulose fibers have cellulose I crystal structure, in the same manner as the modified cellulose fibers before the finely fibrillating treatment mentioned above. A specific structure can be represented by, for example, the above general formula (5).
The average fiber diameter of the fine modified cellulose fibers in this embodiment, irrespective of the kinds of the substituents, is preferably in the nano order.
The average fiber diameter of the fine modified cellulose fibers is preferably 1 nm or more, more preferably 3 nm or more, even more preferably 10 nm or more, and even more preferably 20 nm or more, from the viewpoint of handling property, availability, and costs, and the average fiber diameter is preferably less than 1 μm, preferably 500 nm or less, more preferably 300 nm or less, and even more preferably 200 nm or less, from the viewpoint of handling property and the dispersibility in the solvent or in the resin. Here, the average fiber diameter of the fine modified cellulose fibers as used herein can be measured in accordance with the following method.
Specifically, a dispersion obtained during the finely fibrillating treatment is dropped on mica and dried to provide an observation sample, and a measurement can be taken with an atomic force microscope (AFM), Nanoscope III Tapping mode AFM, manufactured by Digital Instrument, using probe Point Probe (NCH) manufactured by NANOSENSORS. Generally, a minimum unit of cellulose nanofibers prepared from higher plants is packed in nearly square form having sizes of 6 × 6 molecular chains, so that the height analyzed in the image according to the AFM can be assumed to be a width of the fibers. Here, the detailed method for measurement is as described in Examples.
Here, since the crystallinity, the introduction ratio of the substituents or the like of the modified cellulose fibers is hardly influenced by the finely fibrillating treatment, these properties are the same as those of the modified cellulose fibers before the finely fibrillating treatment.

[Method for Producing Modified Cellulose Fibers in Second Embodiment]

The modified cellulose fibers produced by the method of this embodiment comprise cellulose fibers bound to, via an ether bonding, one or more substituents selected from substituents represented by the following general formula (1) and substituents represented by the following general formula (2):

$$-CH_2-CH(OH)-R_1 \quad (1)$$

$$-CH_2-CH(OH)-CH_2-(OA)_n-O-R_1 \quad (2)$$

wherein each of $R_1$ in the general formula (1) and the general formula (2) is independently a linear or branched, unsaturated alkyl group having 2 or more carbon atoms, and preferably 3 or more carbon atoms, and 30 or less carbon atoms; n in the general formula (2) is a number of 0 or more and 50 or less; and A is a linear or branched, divalent saturated hydrocarbon group having 1 or more carbon atoms and 6 or less carbon atoms, and one or more substituents selected from substituents represented by the following general formula (3) and substituents represented by the following general formula (4):

$$-CH_2-CH(OH)-R_2 \quad (3)$$

$$-CH_2-CH(OH)-CH_2-(OA)_n-O-R_2 \quad (4)$$

wherein each of $R_2$ in the general formula (3) and the general formula (4) is independently a hydrogen, a saturated alkyl group having 1 or more carbon atoms and 30 or less carbon atoms, an aromatic group having 6 or more carbon atoms and 30 or less carbon atoms, or a saturated hydrocarbon group having an aromatic ring having 7 or more carbon atoms and 30 or less carbon atoms; n in the general formula (4) is a number of 0 or more and 50 or less; and A is a linear or branched, divalent saturated hydrocarbon group having 1 or more carbon atoms and 6 or less carbon atoms,

wherein the modified cellulose fibers have cellulose I crystal structure.

Each of $R_1$ in the general formula (1) and the general formula (2) is the same as that in First Embodiment.

Each of $R_2$ in the general formula (3) and the general formula (4) is a hydrogen, a saturated alkyl group having 1 or more carbon atoms and 30 or less carbon atoms, an aromatic group having 6 or more carbon atoms and 30 or less carbon atoms, or a saturated hydrocarbon group having an aromatic ring having 7 or more carbon atoms and 30 or less carbon atoms; n in the general formula (4) is a number of 0 or more and 50 or less; and A is a linear or branched, divalent saturated hydrocarbon group having 1 or more carbon atoms and 6 or less carbon atoms. The number of carbon atoms of the saturated alkyl group is preferably 1 or more, and more preferably 4 or more, from the viewpoint of the dispersibility in the organic solvent or in the resin, and the number of carbon atoms is preferably 30 or less, and more preferably 20 or less, from the viewpoint of availability. The number of carbon atoms of the aromatic group is preferably 6 or more, from the viewpoint of the dispersibility in the organic solvent or in the resin, and the number of carbon atoms is preferably 30 or less, and more preferably 20 or less, from the viewpoint of availability. The number of carbon atoms of the saturated hydrocarbon group having an aromatic ring is preferably 7 or more, from the viewpoint of the dispersibility in the organic solvent or in the resin, and the number of carbon atoms is preferably 30 or less, and more preferably 20 or less, from the viewpoint of availability. Specific examples include a methyl group, an ethyl group, a propyl group, a butyl group, a pentyl group, a hexyl group, a heptyl group, an octyl group, a nonyl group, a decyl group, an undecyl group, a dodecyl group, a hexadecyl group, an octadecyl group, a phenyl group, a trityl group, a benzyl group, and the like.

n in the general formula (4) is the number of moles of alkylene oxides added. n is the number of 0 or more and 50 or less, and the number is preferably 0, from the viewpoint of availability and costs, and the number is preferably 40 or less, more preferably 30 or less, even more preferably 20 or less, even more preferably 15 or less, even more preferably 10 or less, and even more preferably 5 or less, from the viewpoint of the same viewpoint.

A in the general formula (4) is a linear or branched, divalent saturated hydrocarbon group having 1 or more carbon atoms and 6 or less carbon atoms, which forms an oxyalkylene group with an adjoining oxygen atom. The number of carbon atoms of A is 1 or more and 6 or less, and the number is preferably 2 or more, from the viewpoint of availability and costs, and the number is preferably 4 or less, and more preferably 3 or less, from the same viewpoint. Specific examples include a methylene group, an ethylene group, a propylene group, a butylene group, a pentylene group, a hexylene group, and the like, among which an ethylene group and a propylene group are preferred, and an ethylene group is more preferred.

The combination of A and n in the general formula (4) is preferably a combination in which A is a linear or branched, divalent saturated hydrocarbon group having 2 or more carbon atoms and 3 or less carbon atoms and n is the number of 0 or more and 20 or less, and more preferably a combination in which A is a linear or branched, divalent saturated hydrocarbon group having 2 or more carbon atoms and 3 or less carbon atoms and n is the number of 0 or more and 15 or less.

The introduction of the above substituent can be carried out in accordance with a known method without particular limitations. Specific examples include a method of introducing, concurrently or separately, one or more compounds selected from unsaturated group-containing alkylene oxide compounds and unsaturated group-containing glycidyl ether compounds (referred to as "compound (b)"), and one or more compounds selected from alkylene oxide compounds represented by the following general formula (3A) and glycidyl ether compounds represented by the following general formula (4A) (referred to as "compound (a)") to a cellulose-based raw material, in the presence of a base, via an ether bonding. Here, the matter that the introduction of these compounds is carried out "concurrently or separately" means that in this embodiment the order of the introduction of the compounds is not particularly limited. For example, a compound (a) and a compound (b) may be concurrently introduced, or alternatively, a compound (a) may be introduced first, and a compound (b) may then be introduced, or a compound (b) may be introduced first, and a compound (a) may then be introduced. In this embodiment, the method of introducing a compound (b) first, and then introducing a compound (a) is preferred, from the viewpoint of the dispersibility in the organic solvent or in the resin. The detailed descriptions will be given hereinbelow by taking the above method as an example.

As the modified cellulose fibers in which a compound (b) is introduced first, those produced in First Embodiment mentioned above can be used regardless of the presence or absence of the finely fibrillating treatment.

As the compound to which a substituent represented by the general formula (3) is to be introduced, for example, an alkylene oxide compound represented by the general formula (3A):

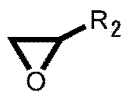

(3 A)

wherein $R_2$ is a hydrogen, a saturated alkyl group having 1 or more carbon atoms and 30 or less carbon atoms, an aromatic group having 6 or more carbon atoms and 30 or less carbon atoms, or a saturated hydrocarbon group having an aromatic ring having 7 or more carbon atoms and 30 or less carbon atoms,

is preferred. The compound prepared by a known technique may be used, or a commercially available product may be used. A total number of carbon atoms of the compound is 2 or more, preferably 3 or more, and more preferably 4 or more, from the viewpoint of the dispersibility in the organic solvent or in the resin, and a total number of carbon atoms is 22 or less, preferably 18 or less, more preferably 14 or less, and even more preferably 12 or less, from the viewpoint of availability and costs.

The number of carbon atoms and specific examples of the saturated alkyl group, the aromatic group, or the saturated hydrocarbon group having an aromatic ring of $R_2$ in the general formula (3A) are the same as those in $R_2$ in the general formula (3).

Specific examples of the compound represented by the general formula (3A) include ethylene oxide, propylene oxide, butylene oxide, 1,2-epoxyhexane, 1,2-epoxydecane, 1,2-epoxyoctadecane, 1,2-epoxybenzene, and the like.

As the compound to which a substituent represented by the general formula (4) is to be introduced, for example, a glycidyl ether compound represented by the general formula (4A):

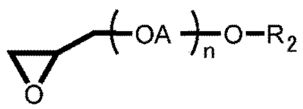

(4 A)

wherein $R_2$ is a saturated alkyl group having 1 or more carbon atoms and 30 or less carbon atoms, an aromatic group having 6 or more carbon atoms and 30 or less carbon atoms, or a saturated hydrocarbon group having an aromatic ring having 7 or more carbon atoms and 30 or less carbon atoms; n is the number of 0 or more and 50 or less; and A is a linear or branched, divalent saturated hydrocarbon group having 1 or more carbon atoms and 6 or less carbon atoms, is preferred. The compound prepared by a known technique may be used, or a commercially available product may be used. A total number of carbon atoms of the compound is 3 or more, and a total number of carbon atoms is preferably 4 or more, more preferably 5 or more, and even more preferably 10 or more, from the viewpoint of the dispersibility in the organic solvent or in the resin, and a total number of carbon atoms is 100 or less, preferably 75 or less, more preferably 50 or less, and even more preferably 25 or less, from the viewpoint of availability and costs.

The number of carbon atoms and specific examples of the saturated alkyl group, the aromatic group, or the saturated hydrocarbon group having an aromatic ring of $R_2$ in the general formula (4A) are the same as those in $R_2$ in the general formula (4).

n in the general formula (4A) is the number of moles of alkylene oxides added. The specific number of n is the same as n in the general formula (4).

The number of carbon atoms and specific examples of A in the general formula (4A) are the same as those in the general formula (4).

Specific examples of the compound represented by the general formula (4A) include butyl glycidyl ether, 2-ethylhexyl glycidyl ether, dodecyl glycidyl ether, stearyl glycidyl ether, isostearyl glycidyl ether, polyoxyalkylene alkyl ether-added glycidyl ethers, phenyl glycidyl ether, trityl glycidyl ether, and benzyl glycidyl ether.

The amounts of the compound represented by the general formula (3A) and the compound represented by the general formula (4A) can be determined by the desired introduction ratio of the substituent represented by the general formula (3) and/or the substituent represented by the general formula (4) defined above in the modified cellulose fibers obtained. The amount, based on the anhydrous glucose unit of the cellulose-based raw materials, is preferably 0.01 equivalents or more, more preferably 0.1 equivalents or more, even more preferably 0.3 equivalents or more, even more preferably 0.5 equivalents or more, and still even more preferably 1.0 equivalent or more, from the viewpoint of the reactivities, and the amount is preferably 10 equivalents or less, more preferably 8 equivalents or less, even more preferably 6.5 equivalents or less, and even more preferably 5 equivalents or less, from the viewpoint of the production costs.

(Etherification Reaction)

The etherification reaction of the compound represented by the general formula (3A) or the compound represented by the general formula (4A) and the modified cellulose fibers obtained in First Embodiment can be carried out by mixing the two components in the presence of a solvent in the same manner as in First Embodiment. As to various conditions such as the kinds of the solvents used, the amounts used, mixing conditions and reaction temperature, those of First Embodiment can be referred.

After the reaction, in order to remove unreacted compounds and bases, and the like, post treatments can be appropriately carried out. As the method of post treatment, for example, an unreacted base is neutralized with an acid (an organic acid, an inorganic acid, or the like), and then washed with a solvent which dissolves an unreacted compound or base. Drying, vacuum drying or the like, may be further carried out, as desired.

Thus, modified cellulose fibers introduced with one or more substituents selected from substituents represented by the general formula (1) and substituents represented by the general formula (2), and one or more substituents selected from substituents represented by the general formula (3) and substituents represented by the general formula (4).

[Modified Cellulose Fibers Before Finely Fibrillating Treatment in Second Embodiment]

The modified cellulose fibers before the finely fibrillating treatment in Second Embodiment comprise cellulose fibers bound to, via ether bonding, one or more substituents selected from substituents represented by the general formula (1) and substituents represented by the general formula (2), and one or more substituents selected from substituents represented by the general formula (3) and substituents represented by the general formula (4), wherein the modified cellulose fibers have a cellulose I crystal structure. A specific structure can be, for example, represented by the general formula (6):

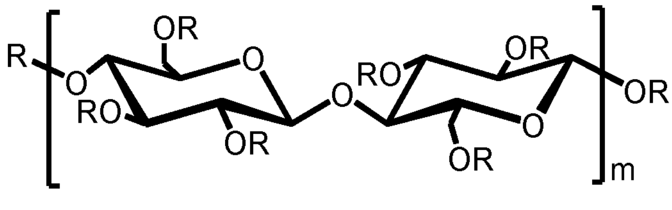

(6)

wherein R, which may be identical or different, is a hydrogen, or a substituent selected from substituents represented by the general formula (1) and substituents represented by the general formula (2), or a substituent selected from substituents represented by the general formula (3) and substituents represented by the general formula (4); and m is preferably an integer of 20 or more and 3,000 or less, with proviso that a case where all R's are simultaneously hydrogens, a case where all are simultaneously the substituents selected from substituents represented by the general formula (1) and substituents represented by the general formula (2), and a case where all are simultaneously the substituents selected from substituents represented by the general formula (3) and substituents represented by the general formula (4), are excluded.

m in the general formula (6) is preferably an integer of 20 or more and 3,000 or less, and it is more preferably an integer of 100 or more and 2,000 or less, from the viewpoint of availability and costs.

In Second Embodiment, the preferred ranges of the average fiber diameter of the cellulose fibers, the crystallinity, and the introduction ratio of the substituent selected from substituents represented by the general formula (1) and substituents represented by the general formula (2) are the same as those of First Embodiment mentioned above, and can be obtained by the same measurement methods.

(Introduction Ratio)

In addition, the introduction ratio of the substituent selected from substituents represented by the general formula (3) and substituents represented by the general formula (4), based on one mol of the anhydrous glucose unit of the modified cellulose fibers in the method of this embodiment, is preferably 0.001 mol or more, more preferably 0.005 mol or more, even more preferably 0.01 mol or more, even more preferably 0.05 mol or more, and even more preferably 0.1 mol or more, from the viewpoint of the affinity of the solvent with the resin, and the introduction ratio is preferably 1.5 mol or less, more preferably 1.3 mol or less, even more preferably 1.0 mol or less, even more preferably 0.8 mol or less, even more preferably 0.6 mol or less, and even more preferably 0.5 mol or less, from the viewpoint of having a cellulose I crystal structure, and exhibiting the strength. Here, in a case where both the substituent represented by the general formula (3) and the substituent represented by the general formula (4) are introduced, the introduction ratio refers to a total introduction molar ratio.

(Finely Fibrillating Treatment)

The method for production of Second Embodiment may embrace the step of subjecting the modified cellulose fibers introduced with substituents as mentioned above to a finely fibrillating treatment. As the finely fibrillating treatment, the treatment method explained in the method for production of First Embodiment mentioned above can be adopted.

Thus, fine modified cellulose fibers produced by the method of this embodiment are obtained.

[Fine Modified Cellulose Fibers in Second Embodiment]

The fine modified cellulose fibers in Second Embodiment comprise, in the same manner as the modified cellulose fibers before the finely fibrillating treatment mentioned above, cellulose fibers bound to, via an ether bonding, one or more substituents selected from substituents represented by the general formula (1) and substituents represented by the general formula (2), and one or more substituents selected from substituents represented by the general formula (3) and substituents represented by the general formula (4), wherein the fine modified cellulose fibers have a cellulose I crystal structure. A specific structure can be represented by, for example, the general formula (6).

The average fiber diameter of the fine modified cellulose fibers in this embodiment is irrespective to the kinds of the substituents, and the average fiber diameter is preferably in nano-order.

The fine modified cellulose fibers are preferably 1 nm or more, more preferably 3 nm or more, even more preferably 10 nm or more, and even more preferably 20 nm or more, from the viewpoint of handling property, availability, and costs, and the fine modified cellulose fibers are preferably less than 1 μm, more preferably 500 nm or less, even more preferably 300 nm or less, and even more preferably 200 nm or less, from the viewpoint of handling property, and the dispersibility in the solvent or in the resin. Here, the average fiber diameter of the fine modified cellulose fibers as used herein can be measured in accordance with the following method.

Specifically, a dispersion obtained by carrying out a finely fibrillating treatment is dropped on mica and dried to provide an observation sample, and a measurement can be taken with an atomic force microscope (AFM), Nanoscope III Tapping mode AFM, manufactured by Digital Instrument, using probe Point Probe (NCH) manufactured by NANOSENSORS. Generally, a minimum unit of cellulose nanofibers prepared from higher plants is packed in nearly square form having sizes of 6 × 6 molecular chains, so that the height analyzed in the image according to the AFM can be assumed to be a width of the fibers. Here, the detailed method for measurement is as described in Examples.

The modified cellulose fibers produced by the method of the present invention have excellent dispersibility in the organic solvent or in the resin. Specifically, when evaluated by the transmittance obtained by a method which is measured in accordance with Examples set forth below, the relative value when the transmittance of the comparative example is defined as 100 is preferably 110 or more, and more preferably 120 or more, so that it can be judged that the dispersibility is high.

Further, when evaluated by the number of fibers which can be visually examined on a fracture surface of a rubber sheet obtained in the method which is measured in accordance with Examples set forth below, the relative value when the number of fibers of the comparative example is defined as 100 is preferably 80 or less, more preferably 70 or less, and even more preferably 60 or less, so that it can be judged that the dispersibility is high.

Further, when the mechanical strength of the rubber sheet is evaluated by the rubber strength at break and the work required for breaking in accordance with the methods in Examples set forth below, the relative values when the rubber strength at break and the work required for breaking in the comparative example are each defined as 100 are preferably 110 or more, more preferably 120 or more, even more preferably 130 or more, and even more preferably 140 or more, so that it can be judged that the mechanical strength is high.

[Resin Composition]

Since the modified cellulose fibers produced by the method of the present invention have excellent affinity with a low-polarity medium, regardless of whether or not the finely fibrillating treatment is carried out, the modified cellulose fibers can be mixed with a known resin, to provide a resin composition. Therefore, the present invention also provides a resin composition containing a thermoplastic resin or a curable resin and the modified cellulose fibers. The resin composition obtained can be worked in accordance with the properties of the resin to be mixed.

The kinds of the resins in the resin composition are roughly classified into two embodiments, each being explained hereinbelow as Embodiment A and Embodiment B.

(Embodiment A)

As the resin in the resin composition of Embodiment A, a thermoplastic resin or a curable resin can be used, and the resin having a hydroxyl value of preferably 700 mgKOH/g or less, more preferably 600 mgKOH/g or less, and even more preferably 500 mgKOH/g or less, is preferred, from the viewpoint of the dispersibility.

The thermoplastic resin includes saturated polyester resins such as polylactic acid resins; olefinic resins such as polyethylene-based resins, polypropylene-based resins, and ABS resins; cellulose-based resins such as triacetylated cellulose and diacetylated cellulose; nylon resins; vinyl chloride resins; styrene resins; vinyl ether resins; polyamide-based resins; polycarbonate-based resins; polysulfonate-based resins; and the like. As the curable resin, a photo-curable resin and/or a thermosetting resin is preferred. Specific examples include epoxy resins; (meth)acrylic resins; phenol resins; unsaturated polyester resins; polyurethane resins; or polyimide resins. These resins may be used alone or may

be used as a mixed resin of two or more members. Here, the term (meth)acrylic resin as used herein means to embrace methacrylic resins and acrylic resins.

A photo-curing treatment and/or a thermosetting treatment can be carried out depending upon the kinds of the resins.

The photo-curing treatment allows to progress the polymerization reaction by active energy ray irradiation of ultraviolet rays or electron beams, using a photopolymerization initiator that generates a radical or a cation.

The above photopolymerization initiator includes, for example, acetophenones, benzophenones, ketals, anthraquinones, thioxanthones, azo compounds, peroxides, 2,3-dialkylthione compounds, disulfide compounds, thiuram compounds, fluoroamine compounds, and the like. More specific examples include 1-hydroxy-cyclohexyl-phenyl-ketone, 2-methyl-1[4-(methylthio)phenyl]-2-morpholinopropan-1-one, benzyl methyl ketone, 1-(4-dodecylphenyl)-2-hydroxy-2-methylpropan-1-one, 1-(4-isopropylphenyl)-2-hydroxy-2-hydroxy-2-methylpropan-1-one, benzophenone, and the like.

With the photopolymerization initiator, for example, a monomer (monofunctional monomer, polyfunctional monomer), or an oligomer or resin or the like, having a reactive unsaturated group can be polymerized.

When an epoxy resin is used in the above resin component, it is preferable to use a curing agent. By blending a curing agent, molding materials obtained from the resin composition can be firmly molded, whereby the mechanical strength can be improved. Here, the content of the curing agent may be appropriately set depending upon the kinds of the curing agents used.

As the resin in Embodiment A, it is preferable to use one or more resins selected from the group consisting of thermoplastic resins, and curable resins selected from epoxy resins, (meth)acrylic resins, phenol resins, unsaturated polyester resins, polyurethane resins, and polyimide resins.

The contents of each component in the resin composition of Embodiment A are as follows depending upon the kinds of the resins.

The content of the resin in the resin composition of Embodiment A is preferably 50% by mass or more, more preferably 60% by mass or more, even more preferably 70% by mass or more, even more preferably 80% by mass or more, and even more preferably 85% by mass or more, from the viewpoint of producing the molded article, and the content is preferably 99.5% by mass or less, more preferably 99% by mass or less, even more preferably 98% by mass or less, and even more preferably 95% by mass or less, from the viewpoint of allowing to contain the modified cellulose fibers.

The content of the modified cellulose fibers in the resin composition of Embodiment A is preferably 0.5% by mass or more, more preferably 1% by mass or more, even more preferably 2% by mass or more, and even more preferably 5% by mass or more, from the viewpoint of mechanical strength of the resin composition obtained, and the content is preferably 50% by mass or less, more preferably 40% by mass or less, even more preferably 30% by mass or less, even more preferably 20% by mass or less, and even more preferably 15% by mass or less, from the viewpoint of moldability of the resin composition obtained and costs.

The amount of the modified cellulose fibers in the resin composition of Embodiment A, based on 100 parts by mass of the resin, is preferably 0.5 parts by mass or more, more preferably 1 part by mass or more, even more preferably 2 parts by mass or more, and still even more preferably 5 parts by mass or more, from the viewpoint of mechanical strength of the resin composition obtained, and the content is preferably 100 parts by mass or less, more preferably 70 parts by mass or less, even more preferably 45 parts by mass or less, even more preferably 25 parts by mass or less, and even more preferably 20 parts by mass or less, from the viewpoint of moldability and costs of the resin composition obtained.

The resin composition of Embodiment A can contain, as other components besides those mentioned above, a compatibilizing agent; a plasticizer; a crystal nucleating agent; a filler including an inorganic filler and an organic filler; a hydrolysis inhibitor; a flame retardant; an antioxidant; a lubricant such as a hydrocarbon wax or an anionic surfactant; an ultraviolet absorbent; an antistatic agent; an anti-clouding agent; a photostabilizer; a pigment; a mildewproof agent; a bactericidal agent; a blowing agent; a surfactant; a polysaccharide such as starch or alginic acid; a natural protein such as gelatin, glue, or casein; an inorganic compound such as tannin, zeolite, ceramics, or a metal powder; a perfume; a fluidity modulator; a leveling agent; an electroconductive agent; an ultraviolet dispersant; a deodorant; or the like, within the range that would not impair the effects of the present invention. The compatibilizing agent includes compounds composed of a polar group having a high affinity with the cellulose and a hydrophobic group having a high affinity with the resin. More specifically, the polar group includes, for example, maleic anhydride, maleic acid, and glycidyl methacrylate, and the hydrophobic group includes, for example, polypropylenes, polyethylenes, and the like. In addition, similarly, other polymeric materials and other resin compositions can be added within the range that would not impair the effects of the present invention. As to the content proportion of the optional additives, the optional additives may be properly contained within the range that would not impair the effects of the present invention, and the content proportion of the optional additives is, for example, preferably of 20% by mass or less, more preferably of 10% by mass or so or less, and even more preferably 5% by mass or so or less, of the resin composition.

The resin composition of Embodiment A can be prepared without particular limitations, so long as the resin

composition contains a resin and modified cellulose fibers mentioned above. The resin composition can be prepared by, for example, stirring raw materials containing a resin and modified cellulose fibers mentioned above, and further optionally various additives with a Henschel mixer or the like, or subjected to melt-kneading or solvent casting method with a known kneader such as a tightly closed kneader, a single-screw or twin-screw extruder, or an open roller-type kneader.

The method for producing a resin composition of Embodiment A is not particularly limited, so long as the method includes the step of mixing a resin and fine modified cellulose fibers mentioned above, or the step of finely fibrillating concurrently with mixing a resin and modified cellulose fibers mentioned above.

The method includes, for example, the step of mixing modified cellulose fibers obtained by the method for production mentioned above, with one or more resins selected from the group consisting of thermoplastic resins, and curable resins selected from epoxy resins, (meth)acrylic resins, phenol resins, unsaturated polyester resins, polyurethane resins, and polyimide resins.

In this step, the modified cellulose fibers are mixed with a resin mentioned above. The resin composition can be prepared by, for example, subjecting raw materials containing a resin and modified cellulose fibers mentioned above, and further optionally various additives to melt-kneading or solvent casting method with a known kneader. The conditions for the melt-kneading and the solution mixing (temperature, time) can be appropriately set according to known techniques, depending upon the kinds of the resins used.

Since the resin composition of Embodiment A thus obtained has favorable dispersibility of fine modified cellulose fibers and excellent homogeneity of the physical properties, the resin composition can be suitably used in various applications such as daily sundries, household electric appliance parts, wrapping materials for household electric appliance parts, and automobile parts.

(Embodiment B)

In addition, in the present invention, as the resin composition (rubber composition) of Embodiment B, an elastomeric resin can be used. As the elastomeric resin, the carbon black blend product is widely used as a reinforcing material in order to increase the strength, but it is considered that the reinforcing effects also have some limitations. However, in the present invention, it is considered that the modified cellulose fibers of the present invention are blended with the elastomeric resin, so that the dispersibility in the resin becomes excellent, thereby making it possible to provide a resin composition having excellent homogeneity of the physical properties.

The rubber used in the present invention is, but not particularly limited to, preferably a diene-based rubber, from the viewpoint of reinforcing ability. Besides the diene-based rubbers, a non-diene-based rubber such as a urethane rubber, a silicone rubber, or a polysulfide rubber can also be used. The diene-based rubber includes natural rubber (NR), polyisoprene rubber (IR), polybutadiene rubber (BR), styrene-butadiene copolymer rubber (SBR), butyl rubber (IIR), butadiene-acrylonitrile copolymer rubber (NBR), chloroprene rubber (CR), modified rubbers, and the like. The modified rubber includes epoxidized natural rubber, hydrogenated natural rubber, hydrogenated butadiene-acrylonitrile copolymer rubber (HNBR), and the like. Among them, one or more members selected from natural rubber (NR), polyisoprene rubber (IR), polybutadiene rubber (BR), styrene-butadiene copolymer rubber (SBR), chloroprene rubber (CR), and modified rubbers are preferred, and one or more members selected from natural rubber (NR), styrene-butadiene copolymer rubber (SBR), chloroprene rubber (CR), and modified rubbers are more preferred, from the viewpoint of satisfying both of favorable processability and high impact resilience of the rubber composition. The diene-based rubbers can be used alone or in a combination of two or more kinds.

In a case where the resin composition of Embodiment B is a rubber composition, the contents of each of the components are as follows.

The content of the rubber in the rubber composition of Embodiment B is preferably 30% by mass or more, more preferably 45% by mass or more, and even more preferably 55% by mass or more, from the viewpoint of mold processability of the composition, and the content is preferably 95% by mass or less, more preferably 90% by mass or less, even more preferably 80% by mass or less, and still even more preferably 70% by mass or less, from the viewpoint of allowing to contain the modified cellulose fibers, and the like.

The content of the modified cellulose fibers in the rubber composition of Embodiment B is preferably 1% by mass or more, more preferably 2% by mass or more, even more preferably 5% by mass or more, and still even more preferably 10% by mass or more, from the viewpoint of mechanical strength of the composition obtained, and the content is preferably 30% by mass or less, more preferably 20% by mass or less, and even more 15% by mass or less, from the viewpoint of operability during the production.

The amount of the modified cellulose fibers in the rubber composition of Embodiment B, based on 100 parts by mass of the rubber, is preferably 1 part by mass or more, more preferably 5 parts by mass or more, even more preferably 10 parts by mass or more, and still even more preferably 15 parts by mass or more, from the viewpoint of mechanical strength of the composition obtained, and the content is preferably 30 parts by mass or less, more preferably

25 parts by mass or less, and even more preferably 20 parts by mass or less, from the viewpoint of operability during the production.

The rubber composition of Embodiment B can be optionally blended with a conventionally general amount of various additives which are blended in tires and other general rubbers, such as reinforcing fillers, vulcanization agents, vulcanization accelerators, vulcanization retarders, age resistors, process oils, vegetable fats and oils, scorching inhibitors, zinc flower, stearic acid, magnesium oxide, waxes, and phenol resins, which are ordinarily used in the rubber industrial fields, within the range that would not impair the object of the present invention.

As the reinforcing filler, a carbon black, silica or the like is suitably used, and the carbon black includes, for example, channel black; furnace black such as SAF, ISAF, N-339, HAF, N-351, MAF, FEF, SRF, GPF, ECF, and N-234; thermal black such as FT and MT; acetylene black, and the like. The carbon black may be constituted by a single species, or carbon blacks may be constituted by plural species.

The vulcanization agent includes, for example, sulfur, sulfur compounds, oximes, nitroso compounds, polyamines, organic peroxides, and the like. The vulcanization agent may be used alone in a single species or in a combination of plural species.

The vulcanization accelerator includes, for example, guanidines, aldehyde-amines, aldehyde-ammonias, thiazoles, sulfenamides, thioureas, thiurams, dithiocarbamates, xanthates, and the like. The vulcanization accelerator may be used alone in a single species or in a combination of plural species.

The vulcanization retarder includes, for example, aromatic organic acids such as salicylic acid, phthalic anhydride, and benzoic acid, and nitroso compounds such as N-nitrosodiphenylamine, N-nitroso-2,2,4-trimethyl-1,2-dihydroquinone, and N-nitrosophenyl-β-naphthylamine, and the like. The vulcanization retarder may be used alone in a single species or in a combination of plural species.

The age resistor includes, for example, amines, quinolines, hydroquinone derivatives, monophenols, polyphenols, thiobisphenols, hindered phenols, phosphite esters, and the like. The age resistor may be used alone in a single species or in a combination of plural species.

The process oil includes paraffin-based process oils, naphthenic process oils, aromatic process oils, and the like. The process oil may be used alone in a single species or in a combination of plural species.

The vegetable fats and oils include castor oil, cottonseed oil, linseed oil, rapeseed oil, soybean oil, palm oil, coconut oil, peanut oil, vegetable wax, rosins, pine oil, and the like. The vegetable fats and oils may be used alone in a single species or in a combination of plural species.

The rubber composition of Embodiment B can be prepared without particular limitations, so long as the rubber composition contains the rubber and the modified cellulose fibers. For example, the rubber composition can be prepared by mixing raw materials containing a rubber and modified cellulose fibers, and further optionally various additives with an open-type kneader such as a roller, or a tightly closed kneader such as a Banbury mixer. The temperature during mixing while in a molten state is usually from 10° to 200°C, and preferably from 20° to 180°C. In addition, the rubber composition may be prepared by preparing a solution in which a rubber and modified cellulose fibers are dissolved with an organic solvent, and thereafter removing the organic solvent component.

The method for producing a rubber composition of Embodiment B is not particularly limited, so long as the method includes the step of mixing a rubber and fine modified cellulose fibers, or the step of finely fibrillating concurrently with mixing a rubber and modified cellulose fibers.

The subjects to be mixed may be only the rubber and the modified cellulose fibers, or various additives can be optionally further used. The number of mixing may be in a single batch or divided several times and mixed, and the raw materials can also be additionally supplied for each mixing step. For example, a step of mixing raw materials other than a vulcanization agent (a kneading step A) and a step of mixing the mixture obtained with a vulcanization agent (a kneading step B) may be carried out. In addition, a kneading step C may be carried out between the kneading step A and the kneading step B, under the same conditions as in the kneading step A in a state that a vulcanization agent is not mixed, for the purpose of decreasing a viscosity of the mixture obtained in the kneading step A or improving the dispersibility of various additives. The mixing can be carried out by a known method with, for example, an open-type kneader such as a roller, or a tightly closed kneader such as a Banbury mixer. In addition, a rubber composition can be obtained by dissolving a rubber with an organic solvent such as toluene, mixing a rubber solution obtained with the modified cellulose fibers, and thereafter removing an organic solvent component by a drying step.

The rubber composition of Embodiment B can be applied to various rubber manufactured article applications by using a rubber composition prepared by a method mentioned above, optionally subjecting the composition to appropriate mold processing, and thereafter vulcanizing or crosslinking the composition.

The rubber composition of Embodiment B has favorable dispersibility of the fine modified cellulose fibers and excellent homogeneity of the physical properties, so that the rubber composition can be suitably used in various applications such as daily sundries, household electric appliance parts, and automobile parts, and especially automobile applications.

In addition, as the rubber manufactured articles using the rubber composition of Embodiment B, for example,

rubber parts for industrial use will be explained. The rubber parts for industrial use include belts and hoses, and the like, and these rubber parts can be produced by subjecting a rubber composition of the present invention optionally blended with various additives to extrusion processing in line with the shape of various parts at the unvulcanized stage to mold, thereby forming unvulcanized rubber parts, and heating the unvulcanized rubber parts with pressure in a vulcanization machine, to provide various rubber parts for industrial use. The improvement in mechanical strength can realize improvements in fundamental performance, and the improvements in homogeneity of physical properties can realize reduction in variances among manufactured articles and improvements in durability owing to reduction in defects or the like.

In addition, in a case where a tire is produced, as a molded article using a rubber composition of Embodiment B, for example, a rubber manufactured article, the tire can be produced by subjecting a rubber composition of the present invention optionally blended with various additives to extrusion processing in line with the shape of each part of the tire such as treads at an unvulcanized stage, molding the extruded parts on a tire molding machine by an ordinary method, pasting together with other tire parts to form an unvulcanized tire, and heating the unvulcanized tire with pressure in a vulcanization machine. The improvement in mechanical strength can realize miniaturization and thinning of various parts, and the improvements in homogeneity of physical properties can realize reduction in variances among manufactured articles and improvements in durability of tire owing to reduction in defects and the like.

With respect to the above-mentioned embodiments, the present invention further discloses the following modified cellulose fibers, methods for producing modified cellulose fibers, and a resin composition.

<1> Modified cellulose fibers comprising cellulose fibers bound to one or more substituents, via an ether bonding, selected from substituents represented by the following general formula (1) and substituents represented by the following general formula (2):

$$-CH_2-CH(OH)-R_1 \qquad (1)$$

$$-CH_2-CH(OH)-CH_2-(OA)_n-O-R_1 \qquad (2)$$

wherein each of $R_1$ in the general formula (1) and the general formula (2) is independently a linear or branched, unsaturated alkyl group having 2 or more carbon atoms and 30 or less carbon atoms; n in the general formula (2) is a number of 0 or more and 50 or less; and A is a linear or branched, divalent saturated hydrocarbon group having 1 or more carbon atoms and 6 or less carbon atoms, and
one or more substituents, via an ether bonding, selected from substituents represented by the following general formula (3) and substituents represented by the following general formula (4):

$$-CH_2-CH(OH)-R_2 \qquad (3)$$

$$-CH_2-CH(OH)-CH_2-(OA)_n-O-R_2 \qquad (4)$$

wherein each of $R_2$ in the general formula (3) and the general formula (4) is independently a hydrogen, a saturated alkyl group having 1 or more carbon atoms and 30 or less carbon atoms, an aromatic group having 6 or more carbon atoms and 30 or less carbon atoms, or a saturated hydrocarbon group having an aromatic ring having 7 or more carbon atoms and 30 or less carbon atoms; n in the general formula (4) is a number of 0 or more and 50 or less; and A is a linear or branched, divalent saturated hydrocarbon group having 1 or more carbon atoms and 6 or less carbon atoms,
wherein the modified cellulose fibers have cellulose I crystal structure.

<2> Modified cellulose fibers having an average fiber diameter of 5 $\mu$m or more, wherein the modified cellulose fibers comprise cellulose fibers bound to one or more substituents, via an ether bonding, selected from substituents represented by the following general formula (1) and substituents represented by the following general formula (2):

$$-CH_2-CH(OH)-R_1 \qquad (1)$$

$$-CH_2-CH(OH)-CH_2-(OA)_n-O-R_1 \qquad (2)$$

wherein each of $R_1$ in the general formula (1) and the general formula (2) is independently a linear or branched, unsaturated alkyl group having 2 or more carbon atoms and 30 or less carbon atoms; n in the general formula (2) is a number of 0 or more and 50 or less; and A is a linear or branched, divalent saturated hydrocarbon group having 1 or more carbon atoms and 6 or less carbon atoms,
wherein the modified cellulose fibers have cellulose I crystal structure.

<3> The modified cellulose fibers according to <1> or <2>, wherein the number of carbon atoms of $R_1$ in the general formula (1) is preferably 2 or more, more preferably 3 or more, and even more preferably 6 or more, and preferably 30 or less, and more preferably 20 or less.

<4> The modified cellulose fibers according to any one of <1> to <3>, wherein the number of carbon atoms of $R_1$ in the general formula (2) is preferably 2 or more, more preferably 3 or more, and even more preferably 6 or more, and preferably 30 or less, and more preferably 20 or less.

<5> The modified cellulose fibers according to any one of <1> to <4>, wherein the number of carbon atoms of A in the general formula (2) is preferably 2 or more, and preferably 4 or less, and more preferably 3 or less.

<6> The modified cellulose fibers according to any one of <1> to <5>, wherein A in the general formula (2) is preferably a group selected from the group consisting of a methylene group, an ethylene group, a propylene group, a butylene group, a pentylene group, and a hexylene group, more preferably an ethylene group or a propylene group, and even more preferably an ethylene group.

<7> The modified cellulose fibers according to any one of <1> to <6>, wherein n in the general formula (2) is preferably 0, and preferably 40 or less, more preferably 30 or less, even more preferably 20 or less, and even more preferably 15 or less.

<8> The modified cellulose fibers according to any one of <1> to <7>, wherein the combination of A and n in the general formula (2) is preferably a combination in which A is a linear or branched, divalent saturated hydrocarbon group having 2 or more carbon atoms and 3 or less carbon atoms and n is a number of 0 or more and 20 or less, and more preferably a combination in which A is a linear or branched, divalent saturated hydrocarbon group having 2 or more carbon atoms and 3 or less carbon atoms and n is a number of 0 or more and 15 or less.

<9> The modified cellulose fibers according to any one of <1> to <8>, wherein the number of carbon atoms of the saturated alkyl group in the general formula (3) and/or the general formula (4) is preferably 1 or more, and more preferably 4 or more, and preferably 30 or less, and more preferably 20 or less.

<10> The modified cellulose fibers according to any one of <1> to <9>, wherein the number of carbon atoms of the aromatic group in the general formula (3) and/or the general formula (4) is preferably 6 or more, and preferably 30 or less, and more preferably 20 or less.

<11> The modified cellulose fibers according to any one of <1> to <10>, wherein the number of carbon atoms of the saturated hydrocarbon group having an aromatic ring in the general formula (3) and/or the general formula (4) is preferably 7 or more, and preferably 30 or less, and more preferably 20 or less.

<12> The modified cellulose fibers according to any one of <1> to <11>, wherein $R_2$ in the general formula (3) and/or the general formula (4) is one or more groups selected from the group consisting of a methyl group, an ethyl group, a propyl group, a butyl group, a pentyl group, a hexyl group, a heptyl group, an octyl group, a nonyl group, a decyl group, an undecyl group, a dodecyl group, a hexadecyl group, an octadecyl group, a phenyl group, a trityl group, and a benzyl group.

<13> The modified cellulose fibers according to any one of <1> to <12>, wherein n in the general formula (4) is preferably 0, and preferably 40 or less, more preferably 30 or less, even more preferably 20 or less, even more preferably 15 or less, even more preferably 10 or less, and even more preferably 5 or less.

<14> The modified cellulose fibers according to any one of <1> to <13>, wherein the number of carbon atoms of A in the general formula (4) is preferably 2 or more, and preferably 4 or less, and more preferably 3 or less.

<15> The modified cellulose fibers according to any one of <1> to <14>, wherein A in the general formula (4) is preferably a group selected from the group consisting of a methylene group, an ethylene group, a propylene group, a butylene group, a pentylene group, and a hexylene group, more preferably an ethylene group or a propylene group, and even more preferably an ethylene group.

<16> The modified cellulose fibers according to any one of <1> to <15>, wherein the combination of A and n in the general formula (4) is preferably a combination in which A is a linear or branched, divalent saturated hydrocarbon group having 2 or more carbon atoms and 3 or less carbon atoms and n is a number of 0 or more and 20 or less, and more preferably a combination in which A is a linear or branched, divalent saturated hydrocarbon group having 2 or more carbon atoms and 3 or less carbon atoms and n is a number of 0 or more and 15 or less.

<17> A method for producing modified cellulose fibers including introducing one or more compounds selected from unsaturated group-containing alkylene oxide compounds and unsaturated group-containing glycidyl ether compounds and one or more compounds selected from an alkylene oxide compound represented by a general formula (3A) and a glycidyl ether compound represented by a general formula (4A) to a cellulose-based raw material in the presence of a base, via an ether bonding,

wherein the modified cellulose fibers comprise cellulose fibers bound to one or more substituents, via an ether bonding, selected from substituents represented by the following general formula (1) and substituents represented by the following general formula (2):

$$-CH_2-CH(OH)-R_1 \qquad (1)$$

$$-CH_2-CH(OH)-CH_2-(OA)_n-O-R_1 \quad (2)$$

wherein each of $R_1$ in the general formula (1) and the general formula (2) is independently a linear or branched, unsaturated alkyl group having 2 or more carbon atoms and 30 or less carbon atoms; n in the general formula (2) is a number of 0 or more and 50 or less; and A is a linear or branched, divalent saturated hydrocarbon group having 1 or more carbon atoms and 6 or less carbon atoms, and
one or more substituents, via an ether bonding, selected from substituents represented by the following general formula (3) and substituents represented by the following general formula (4):

$$-CH_2-CH(OH)-R_2 \quad (3)$$

$$-CH_2-CH(OH)-CH_2-(OA)_n-O-R_2 \quad (4)$$

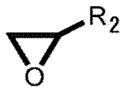

(3 A)

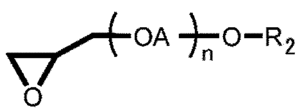

(4 A)

wherein each of $R_2$ in the general formulas (3), (3A), (4), and (4A) is independently a hydrogen, a saturated alkyl group having 1 or more carbon atoms and 30 or less carbon atoms, an aromatic group having 6 or more carbon atoms and 30 or less carbon atoms, or a saturated hydrocarbon group having an aromatic ring having 7 or more carbon atoms and 30 or less carbon atoms; n in the general formula (4) and (4A) is a number of 0 or more and 50 or less; and A is a linear or branched, divalent saturated hydrocarbon group having 1 or more carbon atoms and 6 or less carbon atoms,
wherein the modified cellulose fibers have cellulose I crystal structure.
<18> A method for producing modified cellulose fibers including introducing an unsaturated group-containing alkylene oxide compound to a cellulose-based raw material in the presence of a base via an ether bonding, and thereafter subjecting the cellulose-based raw material to a finely fibrillating treatment,
wherein the modified cellulose fibers comprise cellulose fibers bound to one or more substituents, via an ether bonding, selected from substituents represented by the following general formula (1):

$$-CH_2-CH(OH)-R_1 \quad (1)$$

wherein $R_1$ in the general formula (1) is a linear or branched, unsaturated alkyl group having 2 or more carbon atoms and 30 or less carbon atoms, wherein the modified cellulose fibers have cellulose I crystal structure.
<19> A method for producing modified cellulose fibers including introducing an unsaturated group-containing glycidyl ether compound to a cellulose-based raw material in the presence of a base via an ether bonding, and thereafter subjecting the cellulose-based raw material to a finely fibrillating treatment,
wherein the modified cellulose fibers comprise cellulose fibers bound to one or more substituents, via an ether bonding, selected from substituents represented by the following general formula (2):

$$-CH_2-CH(OH)-CH_2-(OA)_n-O-R_1 \quad (2)$$

wherein $R_1$ in the general formula (2) is a linear or branched, unsaturated alkyl group having 4 or more carbon atoms and 30 or less carbon atoms; n is a number of 0 or more and 50 or less; and A is a linear or branched, divalent saturated hydrocarbon group having 1 or more carbon atoms and 6 or less carbon atoms,
wherein the modified cellulose fibers have cellulose I crystal structure.
<20> The method according to any one of <17> to <19>, wherein the base is one or more members selected from the group consisting of alkali metal hydroxides, alkaline earth metal hydroxides, primary to tertiary amines, quaternary ammonium salts, imidazoles and derivatives thereof, pyridine and derivatives thereof, and alkoxides.
<21> The method according to <20>, wherein the alkali metal hydroxide and the alkaline earth metal hydroxide are one or more members selected from the group consisting of sodium hydroxide, potassium hydroxide, lithium hydroxide, calcium hydroxide, and barium hydroxide.

<22> The method according to <20> or <21>, wherein the primary to tertiary amines are one or more members selected from the group consisting of ethylenediamine, diethylamine, proline, N,N,N',N'-tetramethylethylenediamine, N,N,N',N'-tetramethyl-1,3-propanediamine, N,N,N',N'-tetramethyl-1,6-hexanediamine, tris(3-dimethylaminopropyl)amine, N,N-dimethylcyclohexylamine, and triethylamine.

<23> The method according to any one of <20> to <22>, wherein the quaternary ammonium salt is one or more members selected from the group consisting of tetrabutylammonium hydroxide, tetrabutylammonium chloride, tetrabutylammonium fluoride, tetrabutylammonium bromide, tetraethylammonium hydroxide, tetraethylammonium chloride, tetraethylammonium fluoride, tetraethylammonium bromide, tetramethylammonium hydroxide, tetramethylammonium chloride, tetramethylammonium fluoride, and tetramethylammonium bromide.

<24> The method according to any one of <20> to <23>, wherein the imidazole and derivatives thereof are one or more members selected from the group consisting of 1-methylimidazole, 3-aminopropylimidazole, and carbonyldiimidazole.

<25> The method according to any one of <20> to <24>, wherein the pyridine and derivatives thereof are one or more members selected from the group consisting of N,N-dimethyl-4-aminopyridine and picoline.

<26> The method according to any one of <20> to <25>, wherein the alkoxide is one or more members selected from the group consisting of sodium methoxide, sodium ethoxide, and potassium t-butoxide.

<27> The method according to any one of <17> to <26>, wherein the amount of the base, based on the anhydrous glucose unit of the cellulose-based raw materials, is preferably 0.01 equivalents or more, more preferably 0.05 equivalents or more, even more preferably 0.1 equivalents or more, and even more preferably 0.2 equivalents or more, and preferably 10 equivalents or less, more preferably 8 equivalents or less, even more preferably 5 equivalents or less, and even more preferably 3 equivalents or less.

<28> The method according to any one of <17> to <27>, wherein the mixing of the above cellulose-based raw materials and the base is carried out in the presence of a solvent.

<29> The method according to <28>, wherein the solvent is a solvent selected from the group consisting of water, isopropanol, t-butanol, dimethylformamide, toluene, methyl isobutyl ketone, acetonitrile, dimethyl sulfoxide, dimethylacetamide, 1,3-dimethyl-2-imidazolidinone, hexane, 1,4-dioxane, and mixtures thereof.

<30> The method according to any one of <17> to <29>, wherein the unsaturated group-containing alkylene oxide compound is one or more compounds selected from the group consisting of 3,4-epoxy-1-butene, 1,2-epoxy-5-hexene, 1,2-epoxy-9-decene, and 1,2-epoxy-17-octadecene.

<31> The method according to any one of <17> to <30>, wherein the unsaturated group-containing glycidyl ether compound is one or more glycidyl ether compounds selected from the group consisting of allyl glycidyl ether, 3-butenyl glycidyl ether, 5-hexenyl glycidyl ether, isoprenyl glycidyl ether, 9-decenyl glycidyl ether, 9-octadecenyl glycidyl ether, and 17-octadecenyl glycidyl ether.

<32> The method according to any one of <17> to <31>, wherein the amount of the unsaturated group-containing alkylene oxide compound and the unsaturated group-containing glycidyl ether compound, based on one unit of the anhydrous glucose unit of the cellulose-based raw materials, is preferably 10.0 equivalents or less, more preferably 8.0 equivalents or less, even more preferably 7.0 equivalents or less, and even more preferably 6.0 equivalents or less, and preferably 0.02 equivalents or more, more preferably 0.05 equivalents or more, even more preferably 0.1 equivalents or more, even more preferably 0.3 equivalents or more, and even more preferably 1.0 equivalent or more.

<33> The method according to any one of <17> to <32>, wherein the compound represented by the general formula (3A) is one or more compounds selected from the group consisting of ethylene oxide, propylene oxide, butylene oxide, 1,2-epoxyhexane, 1,2-epoxydecane, 1,2-epoxyoctadecane, and 1,2-epoxybenzene.

<34> The method according to any one of <17> to <33>, wherein the compound represented by the general formula (4A) is one or more compounds selected from the group consisting of butyl glycidyl ether, 2-ethylhexyl glycidyl ether, dodecyl glycidyl ether, stearyl glycidyl ether, isostearyl glycidyl ether, polyoxyalkylene alkyl ether-added glycidyl ethers, phenyl glycidyl ether, trityl glycidyl ether, and benzyl glycidyl ether.

<35> The method according to any one of <17> to <34>, wherein the amounts of the compound represented by the general formula (3A) and the compound represented by the general formula (4A), based on one unit of the anhydrous glucose unit of the cellulose-based raw materials, are preferably 0.01 equivalents or more, more preferably 0.1 equivalents or more, even more preferably 0.3 equivalents or more, even more preferably 0.5 equivalents or more, and still even more preferably 1.0 equivalent or more, and preferably 10 equivalents or less, more preferably 8 equivalents or less, even more preferably 6.5 equivalents or less, and even more preferably 5 equivalents or less.

<36> The method according to any one of <17> to <35>, wherein the finely fibrillating treatment is one or more treatments selected from the group consisting of a high-pressure homogenizer, a disintegrator, a beating machine, a low-pressure homogenizer, a grinder, Masscolloider, a cutter mill, a ball-mill, a jet mill, a short shaft extruder, a twin-screw extruder, a pressurized kneader, a Banbury mixer, Labo-plastomill, an ultrasonic agitator, and a juice mixer for households.

<37> The method according to any one of <17> to <36>, wherein the average fiber diameter of the modified cellulose fibers is preferably 1 nm or more, more preferably 3 nm or more, even more preferably 10 nm or more, and even more preferably 20 nm or more, and preferably less than 1 μm, more preferably 500 nm or less, even more preferably 300 nm or less, and even more preferably 200 nm or less.
<38> The method according to any one of <17> to <37>, wherein the number of carbon atoms of $R_1$ in the general formula (1) is preferably 2 or more, more preferably 3 or more, and even more preferably 6 or more, and preferably 30 or less, and more preferably 20 or less.
<39> The method according to any one of <17> to <38>, wherein the number of carbon atoms of $R_1$ in the general formula (2) is preferably 2 or more, more preferably 3 or more, and even more preferably 6 or more, and preferably 30 or less, and more preferably 20 or less.
<40> The method according to any one of <17> to <39>, wherein the number of carbon atoms of A in the general formula (2) is preferably 2 or more, and preferably 4 or less, and more preferably 3 or less.
<41> The method according to any one of <17> to <40>, wherein A in the general formula (2) is preferably a group selected from the group consisting of a methylene group, an ethylene group, a propylene group, a butylene group, a pentylene group, and a hexylene group, more preferably an ethylene group or a propylene group, and even more preferably an ethylene group.
<42> The method according to any one of <17> to <41>, wherein n in the general formula (2) is preferably 0, and preferably 40 or less, more preferably 30 or less, even more preferably 20 or less, and even more preferably 15 or less.
<43> The method according to any one of <17> to <42>, wherein the combination of A and n in the general formula (2) is preferably a combination in which A is a linear or branched, divalent saturated hydrocarbon group having 2 or more carbon atoms and 3 or less carbon atoms and n is a number of 0 or more and 20 or less, and more preferably a combination in which A is a linear or branched, divalent saturated hydrocarbon group having 2 or more carbon atoms and 3 or less carbon atoms and n is a number of 0 or more and 15 or less.
<44> The method according to any one of <17> to <43>, wherein the number of carbon atoms of the saturated alkyl group in the general formula (3) and/or the general formula (4) is preferably 1 or more, and more preferably 4 or more, and preferably 30 or less, and more preferably 20 or less.
<45> The method according to any one of <17> to <44>, wherein the number of carbon atoms of the aromatic group in the general formula (3) and/or the general formula (4) is preferably 6 or more, and preferably 30 or less, and more preferably 20 or less.
<46> The method according to any one of <17> to <45>, wherein the number of carbon atoms of the saturated hydrocarbon group having an aromatic ring in the general formula (3) and/or the general formula (4) is preferably 7 or more, and preferably 30 or less, and more preferably 20 or less.
<47> The method according to any one of <17> to <46>, wherein $R_2$ in the general formula (3) and/or the general formula (4) is one or more groups selected from the group consisting of a methyl group, an ethyl group, a propyl group, a butyl group, a pentyl group, a hexyl group, a heptyl group, an octyl group, a nonyl group, a decyl group, an undecyl group, a dodecyl group, a hexadecyl group, an octadecyl group, a phenyl group, a trityl group, and a benzyl group.
<48> The method according to any one of <17> to <47>, wherein n in the general formula (4) is preferably 0, and preferably 40 or less, more preferably 30 or less, even more preferably 20 or less, even more preferably 15 or less, even more preferably 10 or less, and even more preferably 5 or less.
<49> The method according to any one of <17> to <48>, wherein the number of carbon atoms of A in the general formula (4) is preferably 2 or more, and preferably 4 or less, and more preferably 3 or less.
<50> The method according to any one of <17> to <49>, wherein A in the general formula (4) is preferably a group selected from the group consisting of a methylene group, an ethylene group, a propylene group, a butylene group, a pentylene group, and a hexylene group, more preferably an ethylene group or a propylene group, and even more preferably an ethylene group.
<51> The method according to any one of <17> to <50>, wherein the combination of A and n in the general formula (4) is preferably a combination in which A is a linear or branched, divalent saturated hydrocarbon group having 2 or more carbon atoms and 3 or less carbon atoms and n is a number of 0 or more and 20 or less, and more preferably a combination in which A is a linear or branched, divalent saturated hydrocarbon group having 2 or more carbon atoms and 3 or less carbon atoms and n is a number of 0 or more and 15 or less.
<52> A resin composition containing modified cellulose fibers as defined in any one of the above <1> to <16> or modified cellulose fibers obtained by the method as defined in any one of the above <17> to <51> and a resin having a hydroxyl value of 700 mgKOH/g or less.

## EXAMPLES

The present invention will be described more specifically by means of the following Production Examples,

Examples, Comparative Examples, and Test Examples. Here, these examples and the like are given solely for the purposes of illustration and are not to be construed as limitations of the present invention. Parts in Examples are parts by mass unless specified otherwise. Here, "ambient pressure" means 101.3 kPa, and "room temperature" means 25°C.

Production Example 1 of Compound to Which Substituent Was Introduced (Etherification Agent) < Production of Stearyl Glycidyl Ether >

Ten kilograms of stearyl alcohol KALCOL 8098 manufactured by Kao Corporation, 0.36 kg of tetrabutylammonium bromide manufactured by KOEI CHEMICAL COMPANY LIMITED, 7.5 kg of epichlorohydrin manufactured by Dow Chemical Company, and 10 kg of hexane were supplied into a 100-L reactor, and the contents were mixed under a nitrogen atmosphere. While holding the liquid mixture at 50°C, 12 kg of a 48% by mass aqueous sodium hydroxide solution manufactured by Nankai Chemical Co., Ltd. was added dropwise thereto over 30 minutes. After the termination of the dropwise addition, the mixture was aged at 50°C for additional 4 hours, and thereafter washed with 13 kg of water repeatedly 8 times, to remove salts and alkali. Thereafter, the internal reactor temperature was raised to 90°C, hexane was distilled off from an upper layer, and the mixture was further purged with steam under a reduced pressure of 6.6 kPa to remove low-boiling point compounds. After dehydration, the mixture was subjected to a reduced-pressure distillation at an internal reactor temperature of 250°C and an internal reactor pressure of 1.3 kPa, to provide 8.6 kg of white stearyl glycidyl ether.

Example 1 < Preparation of Dispersion of Fine Modified Cellulose Fibers by Single Substituent >

A needle-leaf bleached kraft pulp, hereinafter abbreviated as NBKP, manufactured by West Fraser, "Hinton," in a fibrous form, having an average fiber diameter of 24 μm, a cellulose content of 90% by mass, and a water content of 5% by mass, was used as the cellulose-based raw materials. First, to 1.5 g of absolutely dried NBKP were added 1.7 g of a 12% by mass aqueous sodium hydroxide solution, prepared from sodium hydroxide granules manufactured by Wako Pure Chemical Industries, Ltd. and ion-exchanged water, 0.54 equivalents of NaOH per AGU, and 1.5 g of isopropanol manufactured by Wako Pure Chemical Industries, Ltd., and homogeneously mixed, and 2.7 g of 1,2-epoxy-5-hexene manufactured by Wako Pure Chemical Industries, Ltd., 3.0 equivalents per AGU, was then added thereto as an etherification agent. The system was tightly closed, and then allowed to react while standing at 70°C for 24 hours. After the reaction, the reaction mixture was neutralized with acetic acid manufactured by Wako Pure Chemical Industries, Ltd., and sufficiently washed with water, dimethylformamide manufactured by Wako Pure Chemical Industries, Ltd. (DMF), and acetone manufactured by Wako Pure Chemical Industries, Ltd., respectively, to remove impurities, and the washed mixture was vacuum-dried overnight at 70°C, to provide modified cellulose fibers before the finely fibrillating treatment. As a result of the measurement of the average fiber diameter of the modified cellulose fibers before the finely fibrillating treatment in accordance with Test Example 2 described later, the average fiber diameter was 19 μm.

The amount 0.25 g of the modified cellulose fibers before the finely fibrillating treatment obtained were supplied to 49.75 g of DMF, and a mixture was stirred with a homogenizer T.K. ROBOMICS manufactured by PRIMIX Corporation at 3,000 rpm for 30 minutes, and thereafter subjected to a finely fibrillating treatment 10 times with a high-pressure homogenizer "NanoVater L-ES" manufactured by YOSHIDA KIKAI CO., LTD. at 160 MPa, to provide a dispersion of fine modified cellulose fibers of Example 1, in which fine modified cellulose fibers were dispersed in DMF, a solid content concentration of which was 0.5% by mass. As a result of the measurement of the average fiber diameter of the fine modified cellulose fibers of Example 1 in accordance with Test Example 6 described later, the average fiber diameter was 7 nm.

Examples 2 to 4, and A, and Comparative Examples 1, 3, 4, and A

The same procedures as in Example 1 were carried out except that the base, the solvent, and the etherification agent used, and each of the amounts charged were changed as shown in Table 1, to provide a dispersion of fine modified cellulose fibers. The average fiber diameters of the modified cellulose fibers before the finely fibrillating treatment and the fine modified cellulose fibers obtained are also each shown in Table 1.

[Table 1]

Table 1

| | Examples | | | | | Comparative Examples | | | |
|---|---|---|---|---|---|---|---|---|---|
| | A | 1 | 2 | 3 | 4 | A | 1 | 3 | 4 |
| Base | 12% by Mass Sodium Hydroxide | 12% by Mass Sodium Hydroxide | 12% by Mass Sodium Hydroxide | DMAP | 6.4% by Mass Sodium Hydroxide | 6.4% by Mass Sodium Hydroxide | 12% by Mass Sodium Hydroxide | DMAP | 12% by Mass Sodium Hydroxide |
| Amount Charged, g | 1.7 | 1.7 | 1.7 | 0.9 | 3.2 | 1.6 | 1.7 | 0.9 | 1.7 |
| Solvent | Isopropanol | Isopropanol | Isopropanol | Acetonitrile | Isopropanol | Isopropanol | Isopropanol | DMF | Isopropanol |
| Amount Charged, g | 1.5 | 1.5 | 1.5 | 6.0 | 3.0 | 1.5 | 1.5 | 6.0 | 1.5 |
| Etherification Agent | 3,4-Epoxy-1-butene | 1,2-Epoxy-5-hexene | 1,2-Epoxy-5-hexene | 1,2-Epoxy-9-decene | Allyl glycidyl ether | 1,2-Epoxybutane | 1,2-Epoxyhexane | 1,2-Epoxydecane | Isopropyl ether |
| Amount Charged, g | 2.0 | 2.7 | 4.5 | 7.1 | 3.2 | 2.0 | 1.4 | 3.6 | 0.97 |
| Average Fiber Diameter of Modified Cellulose Fibers Before Finely Fibrillating Treatment, μm | 20 | 19 | 17 | 24 | 22 | 22 | 17 | 22 | 19 |
| Average Fiber Diameter of Fine Modified Cellulose Fibers, nm | 15 | 7 | 5 | 15 | 22 | 21 | 25 | 20 | 25 |

DMAP: N,N-Dimethyl-4-aminopyridine, manufactured by Wako Pure Chemical Industries, Ltd.

Comparative Example 2 < Using Finely Fibrillated Cellulose as Raw Material >

To 1.5 g of a slurry-like finely fibrillated cellulose, as a solid content, which previously contained water, "CELISH FD100-G," manufactured by Daicel FineChem Ltd., a solid content concentration of which was 9.5% by mass, as cellulose-based raw materials were added 1.95 g of sodium hydroxide granules, an amount producing a 12% by mass aqueous sodium hydroxide solution, 5.3 equivalents of NaOH per AGU, and 14.3 g of isopropanol, the contents were homogeneously mixed, and 4.5 g of 1,2-epoxy-5-hexene, 5.0 equivalents per AGU, was then added thereto. The system was tightly closed, and then allowed to react while standing at 70°C for 24 hours. After the reaction, the reaction mixture was neutralized with acetic acid, and sufficiently washed with water, DMF, and acetone, to remove impurities, and the washed mixture was vacuum-dried overnight at 70°C, to provide fine modified cellulose fibers.

The amount 0.25 g of the fine modified cellulose fibers obtained were supplied to 49.75 g of DMF, and a mixture was stirred with a magnetic stirrer at room temperature at 1,500 rpm for one hour, to provide a dispersion of fine modified cellulose fibers, in which the fine modified cellulose fibers were dispersed in DMF, a solid content concentration of which was 0.5% by mass. The average fiber diameter of the fine modified cellulose fibers was 50 nm.

Comparative Example B

To 1.5 g of a finely fibrillated cellulose, as a solid content, which previously subjected to solvent replacement with acetonitrile, "CELISH FD100-G," manufactured by Daicel FineChem Ltd., a solid content concentration of which was 9.0% by mass, as cellulose-based raw materials were added 0.9 g of DMAP, 0.8 equivalents per AGU, the contents were homogeneously mixed, and 11.4 g of 1,2-epoxy-9-decene, 8.0 equivalents per AGU, was then added thereto. The system was tightly closed, and then allowed to react while standing at 70°C for 24 hours. After the reaction, the reaction mixture was neutralized with acetic acid, and sufficiently washed with water and acetone, to remove impurities, and the washed mixture was vacuum-dried overnight at 70°C, to provide fine modified cellulose fibers.

The amount 0.25 g of the fine modified cellulose fibers obtained were supplied to 49.75 g of DMF, and a mixture was stirred with a magnetic stirrer at room temperature at 1,500 rpm for one hour, to provide a dispersion of fine modified cellulose fibers, in which the fine modified cellulose fibers were dispersed in DMF, a solid content concentration of which was 0.5% by mass. The average fiber diameter of the fine modified cellulose fibers was 183 nm.

Comparative Example C

The same procedures as in Comparative Example 2 were employed except that the etherification agent was changed to 5.3 g of allyl glycidyl ether, 5.0 equivalents per AGU, to provide fine modified cellulose fibers.

The amount 0.25 g of the fine modified cellulose fibers obtained were supplied to 49.75 g of DMF, and a mixture was stirred with a magnetic stirrer at room temperature at 1,500 rpm for one hour, to provide a dispersion of fine modified cellulose fibers, in which the fine modified cellulose fibers were dispersed in DMF, a solid content concentration of which was 0.5% by mass. The average fiber diameter of the fine modified cellulose fibers was 154 nm.

[Table A]

Table A

| | Comparative Examples | | |
|---|---|---|---|
| | 2 | B | C |
| Base | 12% by mass of Sodium Hydroxide Granules | DMAP | 12% by mass of Sodium Hydroxide Granules |
| Amount Charged, g | 1.95 | 0.9 | 1.95 |
| Solvent | Isopropanol | - | Isopropanol |
| Amount Charged, g | 14.3 | - | 14.3 |
| Etherification Agent | 1,2-Epoxy-5-hexene | 1,2-Epoxy-9-decene | Allyl glycidyl ether |

(continued)

| | Comparative Examples | | |
|---|---|---|---|
| | 2 | B | C |
| Amount Charged, g | 4.5 | 11.4 | 5.3 |
| Average Fiber Diameter, nm | 50 | 183 | 154 |

Example 5 < Preparation of Dispersion of Fine Modified Cellulose Fibers by Two Kinds of Substituents >

To 1.0 g of modified cellulose fibers before the finely fibrillating treatment having a first kind of substituents, a substituent (A), obtained in the preparation process in Example 1 were added 13.8 g of acetonitrile and 0.75 g of DMAP, 1.1 equivalents per AGU, the contents were homogeneously mixed, and 2.5 g of stearyl glycidyl ether, 1.4 equivalents per AGU, prepared in Production Example 1 was then added thereto as an etherification agent in which a second kind of substituents, a substituent (B) is introduced. The system was tightly closed, and then allowed to react while standing at 70°C for 24 hours. After the reaction, the reaction mixture was sufficiently washed with toluene manufactured by Wako Pure Chemical Industries, Ltd. and acetone, to remove impurities, and the washed mixture was vacuum-dried overnight at 70°C, to provide modified cellulose fibers before the finely fibrillating treatment having two kinds of substituents. As a result of the measurement of the average fiber diameter of the modified cellulose fibers having two kinds of substituents before the finely fibrillating treatment in accordance with Test Example 2 described later, the average fiber diameter was 20 μm.

The amount 0.25 g of the modified cellulose fibers before the finely fibrillating treatment obtained having two kinds of substituents were supplied to 49.75 g of toluene, and a mixture was subjected to the same finely fibrillating treatment as in Example 1, to provide a dispersion of fine modified cellulose fibers of Example 5, in which fine modified cellulose fibers were dispersed in toluene, a solid content concentration of which was 0.5% by mass. The average fiber diameter of the fine modified cellulose fibers of Example 5 was 7 nm.

Examples 6 and B, and Comparative Examples 5 and 6

< Preparation of Dispersion of Fine Modified Cellulose Fibers by Two Kinds of Substituents >

The same procedures as in Example 5 were carried out except that the modified cellulose fibers before the finely fibrillating treatment having a single kind of substituents, the base, the solvent, and the etherification agent used, and each of the amounts charged were changed as shown in Table 2, to provide a dispersion of fine modified cellulose fibers. The average fiber diameters of the modified cellulose fibers before the finely fibrillating treatment having two kinds of substituents and the fine modified cellulose fibers obtained are also each shown in Table 2.

[Table 2]

Table 2

| | Examples | | | Comparative Examples | |
|---|---|---|---|---|---|
| | 5 | 6 | B | 5 | 6 |
| Modified Cellulose Fibers Before Finely Fibrillating Treatment Having Single Kind of Substituent | Example 1 | Example 4 | Example 3 | Comparative Example 1 | Comparative Example 4 |
| Amount Charged, g | 1.0 | 1.0 | 1.0 | 1.0 | 1.0 |
| Base | DMAP | DMAP | DMAP | DMAP | DMAP |
| Amount Charged, g | 0.75 | 0.54 | 0.53 | 0.75 | 0.57 |
| Solvent | Acetonitrile | Acetonitrile | Acetonitrile | Acetonitrile | Acetonitrile |

(continued)

| | Examples | | | Comparative Examples | |
|---|---|---|---|---|---|
| | 5 | 6 | B | 5 | 6 |
| Amount Charged, g | 13.8 | 7.0 | 10 | 13.8 | 7.0 |
| Etherification Agent | Stearyl glycidyl ether prepared in Production Example 1 | Stearyl glycidyl ether prepared in Production Example 1 | Stearyl glycidyl ether prepared in Production Example 1 | Stearyl glycidyl ether prepared in Production Example 1 | Stearyl glycidyl ether prepared in Production Example 1 |
| Amount Charged, g | 2.5 | 2.0 | 2.0 | 2.5 | 2.1 |
| Average Fiber Diameter of Modified Cellulose Fibers Before Finely Fibrillating Treatment Having Two Kinds of Substituents, μm | 20 | 20 | 25 | 16 | 18 |
| Average Fiber Diameter of Fine Modified Cellulose Fibers, nm | 7 | 12 | 13 | 9 | 15 |

Example C < Preparation of Dispersion of Fine Modified Cellulose Fibers by Single Kind of Substituent >

The amount 0.25 g of the modified cellulose fibers before the finely fibrillating treatment obtained in the preparation process of Example 3 were supplied to 49.75 g of toluene, and a mixture was stirred with a homogenizer T.K. ROBOMICS manufactured by PRIMIX Corporation at 3,000 rpm for 30 minutes, and thereafter treated 10 times with a high-pressure homogenizer "NanoVater L-ES" manufactured by YOSHIDA KIKAI CO., LTD. at 160 MPa, to provide a dispersion of fine modified cellulose fibers, in which fine modified cellulose fibers were dispersed in toluene, a solid content concentration of which was 0.5% by mass.

Example 7 < Melt-Kneaded Composite of Fine Modified Cellulose Fibers and Rubber >

A rubber composition was produced using a dispersion of the fine modified cellulose fibers obtained in Example 5. As a rubber, a natural rubber (NR) was used. Specifically, 51.60 g of NR, 25.80 g of carbon black (HAF), 5.16 g of a dispersion of fine modified cellulose fibers obtained in Example 5, 1.03 g of stearic acid, 2,2,4-trimethyl-1,2-dihydroquinoline (TMDQ), and N-(1,3-dimethylbutyl)-N'-phenyl-p-phenylenediamine (6PPD) were kneaded in a 50 milliliter-tightly closed mixer for 5 minutes, and a reaction vessel was opened when the temperature reached 150°C, to provide a rubber composition. To the rubber composition were added 1.43 g of zinc oxide, 0.38 g of N-(tert-butyl)-2-benzothiazolylsulfenamine (TBBS), and 0.65 g of sulfur, and the mixture was kneaded in a 50 milliliter-tightly closed mixer for 3 minutes, and a reaction vessel was opened when the temperature reached 100°C, to provide an unvulcanized rubber composition. The rubber composition obtained was subjected to vulcanization treatment in a die having dimensions of 15 × 15 × 0.2 cm at 145°C for 20 minutes, to provide a vulcanized rubber sheet.

Comparative Example 7

The same treatments as in Example 7 were carried out except that a dispersion of fine modified cellulose fibers obtained in Comparative Example 5 was used, to provide a vulcanized rubber sheet.

Example D < Solvent Cast Composite of Fine Modified Cellulose Fibers and Rubber >

A rubber composition was produced using a dispersion of fine modified cellulose fibers obtained in Example C. As a rubber, a styrenebutadiene copolymer SBR, hereinafter SBR, Nipol NS210, manufactured by Nippon Zeon Co., Ltd., was used. Specifically, 1.3 g of SBR, 26.0 g of a dispersion of fine modified cellulose fibers, 26 mg of stearic acid, 39 mg of zinc oxide, 20 mg of sulfur, 7 mg of a vulcanization accelerator N-(tert-butyl)-2-benzothiazolylsulfenamine (TBBS), 10 mg of di-2-benzothiazolyl disulfide (MBTS), 7 mg of 1,3-diphenylguanidine (DPG), and 5 g of toluene were supplied, and the contents were stirred at room temperature (25°C) for 2 hours. After having confirmed that the contents

were dissolved, the solution obtained was subjected to finely fibrillating treatments, one-pass at 60 MPa, and then one-pass at 100 MPa with a high-pressure homogenizer. The dispersion obtained was poured to a glass petri dish having a diameter of 9 cm, and toluene was removed at room temperature and ambient pressure in 2 days.

Thereafter, the residue was dried at room temperature for 12 hours with a vacuum drier, and the dried product was subjected to vulcanization at 150°C for 1 hour, to provide a vulcanized rubber sheet having a thickness of about 0.2 mm.

Example E

The same procedures as in Example D were carried out except that the dispersion of fine modified cellulose fibers used was changed to a dispersion of fine modified cellulose fibers obtained in Example 4, to provide a vulcanized rubber sheet.

Example F

The same procedures as in Example D were carried out except that the dispersion of fine modified cellulose fibers used was changed to a dispersion of fine modified cellulose fibers obtained in Example 5, to provide a vulcanized rubber sheet.

Comparative Example D

The same procedures as in Example D were carried out except that the dispersion of fine modified cellulose fibers used was changed to a dispersion of fine modified cellulose fibers obtained in Comparative Example 3, to provide a vulcanized rubber sheet.

Comparative Example E

The amount 0.25 g of fine modified cellulose fibers before dispersion of DMF obtained in the preparation process of Comparative Example B were supplied to 49.75 g of toluene, and a mixture was stirred with a magnetic stirrer at room temperature at 1,500 rpm for two hours, to provide a dispersion of fine modified cellulose fibers, in which the fine modified cellulose fibers were dispersed in toluene, a solid content concentration of which was 0.5% by mass. The same procedures as in Example D were carried out using a dispersion of fine modified cellulose fibers obtained, to provide a vulcanized rubber sheet.

Comparative Example F

The same procedures as in Example D were carried out except that the dispersion of fine modified cellulose fibers used was changed to a dispersion of fine modified cellulose fibers obtained in Comparative Example 4, to provide a vulcanized rubber sheet.

Comparative Example G

The same procedures as in Comparative Example E were carried out except that the fine modified cellulose fibers before dispersion of DMF used were changed to fine modified cellulose fibers before dispersion of DMF obtained in the preparation process of Comparative Example C, to provide a vulcanized rubber sheet.

Comparative Example H

The same procedures as in Example D were carried out except that the dispersion of fine modified cellulose fibers used was changed to a dispersion of fine modified cellulose fibers obtained in Comparative Example 5, to provide a vulcanized rubber sheet.

Test Example 1 - Introduction Ratio of Substituent, Degree of Substitution

The % content (% by mass) of the hydrophobic ether group, such as general formulas (1) to (4), contained in the fine modified cellulose fibers obtained was calculated in accordance with Zeisel method, which has been known as a method of analyzing an average number of moles added to alkoxy groups of the cellulose ethers described in Analytical Chemistry, 51(13), 2172 (1979), "Fifteenth Revised Japan Pharmacopeia (Section of Method of Analyzing Hydroxypropyl

Cellulose)" or the like. The results are shown in Tables 3 and 4. The procedures are shown hereinbelow.

(i) To a 200 mL volumetric flask was added 0.1 g of n-octadecane, and filled up to a marked line with hexane, to provide an internal standard solution.
(ii) One-hundred milligrams of fine modified cellulose fibers previously purified and dried, and 100 mg of adipic acid were accurately weighed in a 10 mL vial jar, 2 mL of hydrogen iodide was added thereto, and the vial jar was tightly sealed.
(iii) The mixture in the above vial jar was heated with a block heater at 160°C for 1 hour, while stirring with stirrer chips.
(iv) After heating, 3 mL of the internal standard solution and 3 mL of diethyl ether were sequentially injected to the vial, and a liquid mixture was stirred at room temperature for 1 minute.
(v) An upper layer (diethyl ether layer) of the mixture separated in two layers in the vial jar was analyzed by gas chromatography with "GC2010Plus," manufactured by SHIMADZU Corporation to quantify the etherification agent. The analytical conditions were as follows:

Column: DB-5, manufactured by Agilent Technologies, 12 m, 0.2 mm × 0.33 μm
Column Temperature: 100°C, at 10°C/min, to 280°C, holding for 10 min
Injector Temperature: 300°C, detector temperature: 300°C, injection amount: 1 μL

The content of the ether groups in the fine modified cellulose fibers, % by mass, was calculated from a detected amount of the etherification agent used.

From the ether group content obtained, the molar substitution (MS), which was an amount of moles of substituents based on one mol of the anhydrous glucose unit, was calculated using the following mathematical formula (1):

(Math Formula 1)

$$MS = (W1/Mw)/((100-W1)/162.14)$$

W1: The content of the ether groups in the fine modified cellulose fibers, % by mass
Mw: The molecular weight of the introduced etherification reagent, g/mol

Test Example 2 - Average Fiber Diameters of Modified Cellulose Fibers Before Finely Fibrillating Treatment and Cellulose-Based Raw Materials

The fiber diameters of the modified cellulose fibers not subjected to a finely fibrillating treatment and the cellulose-based raw materials were obtained by the following method.

Ion-exchanged water was added to cellulose fibers to be measured, to provide a dispersion, a content of which was 0.01% by mass. The dispersion was measured with a wet-dispersion type image analysis particle counter manufactured by JASCO International Co., Ltd. under the trade name of IF-3200, and the measurement was taken under conditions of a front lens: 2 folds, telecentric zoom lens: 1 fold, image resolution: 0.835 μm/pixel, syringe inner diameter: 6,515 μm, spacer thickness: 500 μm, image recognition mode: ghost, threshold value: 8, amount of analytical sample: 1 mL, and sampling: 15%. One hundred or more cellulose fiber strands were measured, and an average ISO fiber diameter thereof was calculated as an average fiber diameter.

Test Example 3 - Confirmation of Crystal Structure

The crystal structure of the fine modified cellulose fibers was confirmed by measuring with an X-ray diffractometer manufactured by Rigaku Corporation under the trade name of "Rigaku RINT 2500VC X-RAY diffractometer." The results are shown in Tables 3 and 4.

The measurement conditions were: X-ray source: Cu/Kα-radiation, tube voltage: 40 kV, tube current: 120 mA, measurement range: diffraction angle 2θ = 5° to 45°, and scanning speed of X-ray: 10°/min. A sample for the measurement was prepared by compressing pellets to a size having an area of 320 mm$^2$ and a thickness of 1 mm. Also, the crystallinity of the cellulose I crystal structure was calculated using X-ray diffraction intensity obtained based on the following formula (A):

$$\text{Cellulose I Crystallinity, \%} = [(I22.6-I18.5)/I22.6] \times 100 \qquad (A)$$

wherein I22.6 is a diffraction intensity of a lattice face (002 face)(angle of diffraction 2θ = 22.6°), and I18.5 is a diffraction intensity of an amorphous portion (angle of diffraction 2θ = 18.5°), in X-ray diffraction.

Test Example 4 - Dispersibility in Solvent

The light beam transmittance of a dispersion of fine modified cellulose fibers, a solid content concentration of which was 0.5% by mass, obtained in each of Examples 1 to 6 and A to C and Comparative Examples 1 to 6 and A to C at a wavelength of 660 nm was measured with a double beam spectrophotometer using "U-2910" manufactured by Hitachi High-Tech Science Corporation and a silica cell having an optical path length of 10 mm under conditions of 25°C for one minute. The results are shown in Tables 3, 4, and B. It is shown that as the measured transmittance becomes higher, the cellulose fibers are more favorably dispersed. Here, the transmittance in Tables 3 and 4 is such that Examples 1 and 2 and Comparative Example 2 are relative values when the transmittance of Comparative Example 1 is defined as 100, and that Examples 3 to 6 are relative values when each of the corresponding Comparative Examples 3 to 6 is defined as 100. Example A is a relative value when the transmittance of Comparative Example A is defined as 100, Example B is a relative value when the transmittance of Example C is defined as 100, and Comparative Examples B and C are relative values when the transmittance of each of Comparative Examples 3 and 4 is defined as 100. In addition, in Table B, Example A is a relative value when the transmittance of Example 4 is defined as 100.

[Table 3]

Table 3

| | Comp. Ex. A | Ex. A | Comp. Ex. 1 | Ex. 1 | Ex. 2 | Comp. Ex. 2 | Comp. Ex. 3 | Ex. 3 | Comp. Ex. B | Comp. Ex. 4 | Ex. 4 | Comp. Ex. C |
|---|---|---|---|---|---|---|---|---|---|---|---|---|
| Formula of Substituent | General formula (1) | General formula (1) | General formula (1) | General formula (1) | General formula (1) | General formula (1) | General formula (1) | General formula (1) | General formula (1) | General formula (2) | General formula (2) | General formula (2) |
| Structure of $R_1$ | $-C_2H_5$ | $-CH=CH_2$ | $-C_4H_9$ | $-C_2H_4-CH=CH_2$ | $-C_2H_4-CH=CH_2$ | $-C_2H_4-CH=CH_2$ | $-C_8H_{17}$ | $-C_6H_{12}-CH=CH_2$ | $-C_6H_{12}-CH=CH_2$ | $-CH(CH_3)_2$ | $-CH_2-CH=CH_2$ | $-CH_2-CH=CH_2$ |
| MS | 0.20 | 0.20 | 0.13 | 0.14 | 0.27 | 0.12 | 0.23 | 0.14 | 0.16 | 0.09 | 0.13 | 0.12 |
| Crystal Structure of Modified Cellulose Fibers | Cellulose I | Cellulose I | Cellulose I | Cellulose I | Cellulose I | Cellulose I | Cellulose I | Cellulose I | Cellulose I | Cellulose I | Cellulose I | Cellulose I |
| Transmittance, 10-pass treatment, 0.5 wt% | 100 | 373 | 100 | 1,229 | 1,343 | 57 with precipitation | 100 | 229 | 39 with precipitation | 100 with precipitation | 180 | 81 with precipitation |

[Table B]

Table B

| | Ex. A | Ex. 4 |
|---|---|---|
| Transmittance, 10-pass treatment, 0.5 wt% | 362 | 100 |

It could be seen from Table 3 that a case where the finely fibrillated cellulose fibers were previously etherified, Comparative Example 2, showed greatly worsened dispersibility. In addition, it could be seen from Table 3 that a case where the fine modified cellulose fibers having an unsaturated substituent were used showed higher transmittance than a case where the fine modified cellulose having a corresponding saturated substituent was used. Also, it is considered from Table 3 that in the formula (1) the number of carbon atoms of $R_1$ is preferably 4 or more, and that the same applies to a case where a modifying group of the formula (2) having a similar main chain backbone is used. In addition, from the comparison of the cases of the formula (1), Examples A, 1, 2, and 3, and the case of the formula (2), Example 4, those cases of the formula (1) are preferred over the formula (2). On the other hand, from Table B, a case where the number of carbon atoms of $R_1$ of the formula (1) is 2, Example A, shows high dispersibility. In view of the above, the structure in which the number of carbon atoms of $R_1$ is 2 or more as to the formula (1), and the number of carbon atoms of $R_1$ is 4 or more as to the formula (2) is preferred.

[Table 4]

Table 4

| | | Ex. B | Ex. C | Comp. Ex. 5 | Ex. 5 | Comp. Ex. 6 | Ex. 6 |
|---|---|---|---|---|---|---|---|
| Substituent (A) | Formula for Substituent | General formula (1) | General formula (1) | General formula (1) | General formula (1) | General formula (2) | General formula (2) |
| | Structure of $R_1$ | $-C_6H_{12}-CH=CH_2$ | $-C_6H_{12}-CH=CH_2$ | $-C_4H_9$ | $-C_2H_4-CH=CH_2$ | $-CH(CH_3)_2$ | $-CH_2-CH=CH_2$ |
| | MS | 0.14 | 0.14 | 0.13 | 0.14 | 0.09 | 0.13 |
| Substituent (B) | Formula for Substituent | General formula (4) | - | General formula (4) | General formula (4) | General formula (4) | General formula (4) |
| | Structure of $R_2$ | $-C_{18}H_{37}$ | - | $-C_{18}H_{37}$ | $-C_{18}H_{37}$ | $-C_{18}H_{37}$ | $-C_{18}H_{37}$ |
| | MS | 0.13 | - | 0.48 | 0.51 | 0.34 | 0.43 |
| Crystal Structure of Fine Modified Cellulose Fibers | | Cellulose I | Cellulose I | Cellulose I | Cellulose I | Cellulose I | Cellulose I |
| Transmittance, 5-pass treatment | | 196 | 100 | 100 | 112 | 100 | 138 |

It could be seen from Table 4 that even in cases where the fine modified cellulose fibers having two kinds of substituents were used, Examples 5 and 6 bound to an unsaturated substituent showed higher transmittance than Comparative Examples 5 and 6 bound to a corresponding saturated substituent. In addition, it could be seen from the comparisons of Examples B and C that Example B having two kinds of substituents show higher transmittance than Example C having one kind of a substituent.

Test Example 5 - Dispersibility in Rubber

Each of the vulcanized rubber sheets obtained in Examples 7, D, and E and Comparative Examples 7, D, E, F, and G were stretched till break, and a stretched broken surface produced was observed at 3 points or more for each sample with an electronic microscope "VE-8800" manufactured by KEYENCE, at an acceleration voltage of 3 kV, a spot diameter of 4, and magnification folds of 500 times. Before the observation, the broken surface of the vulcanized rubber sheets was subjected to gold sputtering treatment ("MSP-1S," manufactured by KABUSHIKI KAISHA VACUUM DEVICE, sputtering time of 60 seconds). The number of fibers having a width of 500 nm or more within the observation image of the broken surface of 45,000 $\mu m^2$ obtained was counted. The results are shown in Tables 5 and C. It is shown that the smaller the number of fibers having a width of 500 nm or more, the more favorably the cellulose fibers are dispersed. Here, the number of fibers for Example 7 was expressed as a relative value where the number of fibers of Comparative Example 7 was defined as 100, the number of fibers of Example D and Comparative Example E were expressed as relative values where the number of fibers of Comparative Example D was defined as 100, and the number of fibers of Example E and Comparative Example G were expressed as relative values where the number of fibers of Comparative Example F was defined as 100.

[Table 5]

Table 5

| | Ex. 7 | Comp. Ex. 7 |
|---|---|---|
| Fine Modified Cellulose Fibers | Ex. 5 | Comp. Ex. 5 |
| Number of Fibers | 41 | 100 |

It could be seen from Table 5 that even in a case where the fine modified cellulose fibers having two kinds of substituents were used, Example 7 bound to an unsaturated substituent had smaller number of fibers having an observed width of 500 nm or more than that of Comparative Example 7 bound to a corresponding saturated substituent, so that the dispersibility in the rubber is even higher.

[Table C]

Table C

| | Ex. | Comp. Ex. | | Ex. | Comp. Ex. | |
|---|---|---|---|---|---|---|
| | D | D | E | E | F | G |
| Fine Modified Cellulose Fibers | Ex. 3 | Comp. Ex. 3 | Comp. Ex. B | Ex. 4 | Comp. Ex. 4 | Comp. Ex. C |
| Number of Fibers | 78 | 100 | 122 | 87 | 100 | 102 |

It could be seen from Table C that cases where finely fibrillated cellulose fibers that were previously etherified, Comparative Examples E and G, had greatly worsened dispersibility in the rubber. In addition, it could be seen from Table C that cases where fine modified cellulose fibers having an unsaturated substituent were used, Examples D and E, had smaller number of fibers having an observed width of 500 nm or more than cases where fine modified cellulose having a corresponding saturated substituent were used, Comparative Examples D and F, so that the dispersibility in the rubber is even higher.

Test Example 6 - Average Fiber Diameter of Fine Modified Cellulose Fibers

With respect to each of dispersions obtained in Examples 1 and the like, a solvent was further added to a dispersion of fine modified cellulose fibers, to provide a 0.0001% by mass dispersion. The dispersion was dropped on mica and dried to provide an observation sample. A fiber height of the cellulose fibers in the observation sample was measured with an atomic force microscope (AFM), Nanoscope III Tapping mode AFM, manufactured by Digital Instrument, a probe used being Point Probe (NCH) manufactured by NANOSENSORS. During that measurement, 5 or more sets of cellulose fibers were extracted from a microscopic image in which the cellulose fibers can be confirmed, and an average fiber diameter was calculated from the fiber heights of the fibers.

Test Example A - Tensile Modulus

In a thermostatic chamber at 25°C, a tensile modulus of a vulcanized rubber sheet was measured in accordance with a tensile test with a tensile compression tester "Autograph AGS-X" manufactured by SHIMADZU Corporation. Samples punched through with No. 7 dumbbell were set apart with a span of 20 mm and measured at a crosshead speed of 50 mm/min. An area circumscribed by a stress-strain curve obtained was compared as an amount of work required for rubber for breaking. The results are shown in Table D. It is shown that the greater the strength at break and the amount of work required for breaking, the more excellent the mechanical strength. Here, the strength at break and the amount of work required for breaking are both a relative value when the values for Comparative Example H are defined as 100.

[Table D]

Table D

| | Ex. F | Comp. Ex. H |
|---|---|---|
| Fine Modified Cellulose Fibers | Ex. 5 | Comp. Ex. 5 |
| Strength of Rubber at Break, Index | 144 | 100 |
| Amount of Work, Toughness, Index | 168 | 100 |

It could be seen from Table D that in a case where the fine modified cellulose fibers having two kinds of substituents were used, Example F bound to the unsaturated substituents had greater strength of rubber at break and greater amount of work required for breaking than Comparative Example H bound to the corresponding saturated substituents, thereby having more excellent mechanical strength.

INDUSTRIAL APPLICABILITY

Since the modified cellulose fibers obtained by the method for production of the present invention have high transparency and dispersibility, the molded article obtained by forming the modified cellulose fibers into a composite with a resin would have excellent mechanical strength, so that the molded article can be suitably used in various industrial applications such as daily sundries, household electric appliance parts, wrapping materials for household electric appliance parts, and automobile parts.

## Claims

1. Modified cellulose fibers comprising cellulose fibers bound to one or more substituents, via an ether bonding, selected from substituents represented by the following general formula (1) and substituents represented by the following general formula (2):

$$-CH_2-CH(OH)-R_1 \qquad (1)$$

$$-CH_2-CH(OH)-CH_2-(OA)_n-O-R_1 \qquad (2)$$

wherein each of $R_1$ in the general formula (1) and the general formula (2) is independently a linear or branched, unsaturated alkyl group having 2 or more carbon atoms and 30 or less carbon atoms; n in the general formula (2) is a number of 0 or more and 50 or less; and A is a linear or branched, divalent saturated hydrocarbon group having 1 or more carbon atoms and 6 or less carbon atoms, and
one or more substituents, via an ether bonding, selected from substituents represented by the following general formula (3) and substituents represented by the following general formula (4):

$$-CH_2-CH(OH)-R_2 \quad (3)$$

$$-CH_2-CH(OH)-CH_2-(OA)_n-O-R_2 \quad (4)$$

wherein each of $R_2$ in the general formula (3) and the general formula (4) is independently a hydrogen, a saturated alkyl group having 1 or more carbon atoms and 30 or less carbon atoms, an aromatic group having 6 or more carbon atoms and 30 or less carbon atoms, or a saturated hydrocarbon group having an aromatic ring having 7 or more carbon atoms and 30 or less carbon atoms; n in the general formula (4) is a number of 0 or more and 50 or less; and A is a linear or branched, divalent saturated hydrocarbon group having 1 or more carbon atoms and 6 or less carbon atoms, and
wherein the modified cellulose fibers have cellulose I crystal structure.

2. A method for producing modified cellulose fibers comprising introducing one or more compounds selected from unsaturated group-containing alkylene oxide compounds and unsaturated group-containing glycidyl ether compounds and one or more compounds selected from an alkylene oxide compound represented by a general formula (3A) and a glycidyl ether compound represented by a general formula (4A) to a cellulose-based raw material in the presence of a base, via an ether bonding,
wherein the modified cellulose fibers comprise cellulose fibers bound to one or more substituents, via an ether bonding, selected from substituents represented by the following general formula (1) and substituents represented by the following general formula (2):

$$-CH_2-CH(OH)-R_1 \quad (1)$$

$$-CH_2-CH(OH)-CH_2-(OA)_n-O-R_1 \quad (2)$$

wherein each of $R_1$ in the general formula (1) and the general formula (2) is independently a linear or branched, unsaturated alkyl group having 2 or more carbon atoms and 30 or less carbon atoms; n in the general formula (2) is a number of 0 or more and 50 or less; and A is a linear or branched, divalent saturated hydrocarbon group having 1 or more carbon atoms and 6 or less carbon atoms, and
one or more substituents, via an ether bonding, selected from substituents represented by the following general formula (3) and substituents represented by the following general formula (4):

$$-CH_2-CH(OH)-R_2 \quad (3)$$

$$-CH_2-CH(OH)-CH_2-(OA)_n-O-R_2 \quad (4)$$

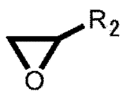

(3 A)

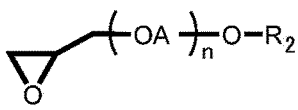

(4 A)

wherein each of $R_2$ in the general formulas (3), (3A), (4), and (4A) is independently a hydrogen, a saturated alkyl group having 1 or more carbon atoms and 30 or less carbon atoms, an aromatic group having 6 or more carbon atoms and 30 or less carbon atoms, or a saturated hydrocarbon group having an aromatic ring having 7 or more carbon atoms and 30 or less carbon atoms; n in the general formula (4) and (4A) is a number of 0 or more and 50 or less; and A is a linear or branched, divalent saturated hydrocarbon group having 1 or more carbon atoms and 6 or less carbon atoms,

wherein the modified cellulose fibers have cellulose I crystal structure.

**3.** A method for producing modified cellulose fibers comprising introducing an unsaturated group-containing alkylene oxide compound to a cellulose-based raw material in the presence of a base via an ether bonding, and thereafter subjecting the cellulose-based raw material to a finely fibrillating treatment,
wherein the modified cellulose fibers comprise cellulose fibers bound to one or more substituents, via an ether bonding, selected from substituents represented by the following general formula (1):

$$-CH_2-CH(OH)-R_1 \qquad (1)$$

wherein $R_1$ in the general formula (1) is a linear or branched, unsaturated alkyl group having 2 or more carbon atoms and 30 or less carbon atoms, wherein the modified cellulose fibers have cellulose I crystal structure.

**4.** A method for producing modified cellulose fibers comprising introducing an unsaturated group-containing glycidyl ether compound to a cellulose-based raw material in the presence of a base via an ether bonding, and thereafter subjecting the cellulose-based raw material to a finely fibrillating treatment,
wherein the modified cellulose fibers comprise cellulose fibers bound to one or more substituents, via an ether bonding, selected from substituents represented by the following general formula (2):

$$-CH_2-CH(OH)-CH_2-(OA)_n-O-R_1 \qquad (2)$$

wherein $R_1$ in the general formula (2) is a linear or branched, unsaturated alkyl group having 4 or more carbon atoms and 30 or less carbon atoms; n is a number of 0 or more and 50 or less; and A is a linear or branched, divalent saturated hydrocarbon group having 1 or more carbon atoms and 6 or less carbon atoms,
wherein the modified cellulose fibers have cellulose I crystal structure.

**5.** Modified cellulose fibers having an average fiber diameter of 5 μm or more, wherein the modified cellulose fibers comprise cellulose fibers bound to one or more substituents, via an ether bonding, selected from substituents represented by the following general formula (1) and substituents represented by the following general formula (2):

$$-CH_2-CH(OH)-R_1 \qquad (1)$$

$$-CH_2-CH(OH)-CH_2-(OA)_n-O-R_1 \qquad (2)$$

wherein each of $R_1$ in the general formula (1) and the general formula (2) is independently a linear or branched, unsaturated alkyl group having 2 or more carbon atoms and 30 or less carbon atoms; n in the general formula (2) is a number of 0 or more and 50 or less; and A is a linear or branched, divalent saturated hydrocarbon group having 1 or more carbon atoms and 6 or less carbon atoms,
wherein the modified cellulose fibers have cellulose I crystal structure.

**6.** A resin composition comprising modified cellulose fibers as defined in claim 1 or claim 5 or modified cellulose fibers obtained by the method as defined in any one of claims 2 to 4, and a resin having a hydroxyl value of 700 mgKOH/g or less.

**INTERNATIONAL SEARCH REPORT**

International application No.
PCT/JP2018/008608

A. CLASSIFICATION OF SUBJECT MATTER
Int.Cl. C08B11/08(2006.01)i, C08K7/02(2006.01)i, C08L1/26(2006.01)i, C08L101/00(2006.01)i, D06M13/11(2006.01)i

According to International Patent Classification (IPC) or to both national classification and IPC

B. FIELDS SEARCHED

Minimum documentation searched (classification system followed by classification symbols)
Int.Cl. C08B11/08, C08K7/02, C08L1/26, C08L101/00, D06M13/11

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
JSTPlus/JMEDPlus/JST7580(JDreamIII), CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>A | JP 2002-522569 A (AKZO NOBEL N.V.) 23 July 2002, claims, example E in paragraphs [0043]-[0046] & US 2001/0018468 A1, claims, example E in paragraphs [0041]-[0043] & WO 2000/008058 A1 & EP 1117694 A1 & CN 1318071 A | 1-2,4-6<br>3 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 June 2018 (04.06.2018) | 12 June 2018 (12.06.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/008608

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2009-209361 A (SE TYLOSE GMBH & CO KG) 17 September 2009, claims, examples 6, 13 in paragraphs [0065]-[0067], [0081] & US 2009/0221813 A1, claims, examples 6, 13 in paragraphs [0102], [0118] & EP 2098539 A1 & KR 10-2009-0094759 A | 4-6<br>1-3 |
| X<br>A | JP 10-265502 A (CLARIANT GMBH) 06 October 1998, claims, example 2 in paragraph [0030] & US 5994531 A, claims, example 2 in column 6, line 59 to column 7, line 11 & EP 863158 A3 & CN 1194987 A | 4-6<br>1-3 |
| X<br>A | KLIMOV, V. A. et al., セルロースのヒドロキシブテニルエーテル, Khim Drev, 1991, no. 2, pp. 64-67, non-official translation (Hydroxy butenyl ether of cellulose) | 3,5-6<br>1-2,4 |
| X<br>A | JP 2006-502251 A (SE TYLOSE GMBH & CO KG) 19 January 2006, claims, examples 10-13 in paragraphs [0061]-[0068] & US 2005/0182190 A1, claims, examples 10-13 in paragraphs [0077]-[0085] & WO 2004/013186 A1 & EP 1527104 A1 | 5-6<br>1-4 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002524618 A


### Non-patent literature cited in the description


- Fifteenth Revised Japan Pharmacopeia (Section of Method of Analyzing Hydroxypropyl Cellulose). *Analytical Chemistry,* 1979, vol. 51 (13), 2172